# EUROPEAN PATENT SPECIFICATION

(11) **EP 4 429 958 B1**
(45) Date of publication and mention of the grant of the patent: **14.01.2026**
(21) Application number: 22797824.4
(22) Date of filing: 19.10.2022
(51) Int. Cl.: B65G 47/52, B65B 7/16, B65B 43/46, B65B 43/48, B65G 47/90

(54) **CONTAINER HANDLING METHODS AND SYSTEMS**
VERFAHREN UND SYSTEME ZUR HANDHABUNG VON BEHÄLTERN
PROCÉDÉS ET SYSTÈMES DE MANIPULATION DE RÉCIPIENTS

(30) Priority: 11.11.2021 GB 202116261
(43) Date of publication of application: 18.09.2024
(73) Proprietor: Ishida Europe Limited, Birmingham, West Midlands B32 3DB (GB)
(72) Inventor: NEALE, Graham Andrew Charles, Bournemouth Dorset BH8 8JS (GB); VINE, Lee Michael, Lychett Matravers Dorset BH16 6EL (GB); POTTER, Andrew Geoffrey, Oldbury West Midlands B69 1LX (GB)
(74) Representative: Gill Jennings & Every LLP
(86) International application number: PCT/GB2022/052668
(87) International publication number: WO 2023/084186

(56) References cited:
- EP-A1- 2 275 351
- EP-A2- 2 644 517
- US-A- 5 475 965
- US-A1- 2012 013 138

## Description

### FIELD

The invention relates to container handling systems and methods performed using such systems. In this context the term "container" is understood to include containers having an upwardly facing opening which may sealed using (for instance) a lid or film. These containers include examples commonly referred to as "trays" or "pots".

In particular, the invention allows open trays, pots and other containers to be transferred, handled and sealed quickly and with reduced risk of spilling their contents. These systems and methods are particularly well suited for use in the food packaging industry.

### BACKGROUND

It is common in the food industry to package food products such as fruits, vegetables, meats, and pre-prepared meals in sealed containers such as trays or pots.

In one apparatus, open trays are filled with food product(s) and then supplied, typically in groups or batches for sealing to a traysealer having a heat sealing tool. The heat sealing tool has a lower tool part on which the tray(s) to be sealed are positioned, and an upper tool part typically comprising a contoured heated element or plate. The lower tool half and the upper tool part are brought together with a heat sealable film between the tray(s) and the upper tool part, such that the upper tool part is brought into engagement with the heat sealable film and a rim of each tray. The upper tool part is then heated to join the film to the rim(s) of the tray(s). The sealed tray(s) are then removed from the apparatus. Although such an apparatus may produce an effective seal, there are significant problems with this apparatuses and other existing systems.

Critically the transfer of open containers before sealing is prone to spillages. Containers are typically dragged or pushed across gaps or interfaces between adjacent machinery (e.g. conveyors and traysealers). As the containers travel across gaps between adjacent machinery significant forces are be imparted on the container. These forces may cause damage to the containers or their contents and/or cause the contents to escape or spill from the containers.

Spillages are particularly common when handling liquid foodstuffs such as soups, broths and yogurts, or food products that comprise a liquid or sauce such as curries and stews. Similarly, spillages are more likely when handling relatively tall containers or containers formed of flexible materials such as cardboard. Equally, spillages are more likely when handling containers that have sharp vertical edges - i.e. where the edges between the faces of the containers are not have smooth, rounded or chamfered - as handling operations must be more precise. Spillages cause not only in a reduction in product within a container but also increase the frequency at which container handling machinery must be cleaned and maintained.

Spillages may be avoided or reduced by decreasing the speed at which open containers are conveyed and transferred. However, this reduction in speed inherently reduces output. Thus, there exists an undesirable comprise between the throughput of containers and the risk of spillages.

Therefore, there is a desire, especially in the food packaging industry to provide improved means of handling containers which overcomes at least some of the disadvantages discussed above. In particular, there is a desire for methods and systems which provide increased output, improved product quality, and reduced maintenance and cleaning requirements.

US 5475965 A discloses a machine for sealing containers by applying a covering film, which comprises a framework for supporting a container sealing unit which is located between a unit for feeding the containers to be sealed and a conveyor for removing the sealed containers. There are also pusher arms which are detachably associable with multiple containers to transfer them from the feeder unit to the sealing unit and from the sealing unit to the removal conveyor. The particularity of the invention resides in the fact that the feeder unit comprises an accumulation conveyor which is located upstream of the sealing unit and downstream of at least one buffer conveyor which is interposed between the accumulation conveyor and an external feeder conveyor.

### SUMMARY OF INVENTION

The invention solves the problems discussed above by providing methods and systems for handling containers which reduce the forces experienced by the container and its contents. This is especially important when handling open containers containing food products comprising a liquid. For example the invention is particularly well suited for handling pots containing soup, yogurt or other foodstuffs which tend to have high centres of gravity and are less stable than many other packaged food products. Similarly, the invention is well suited for handling fragile foodstuffs such as baked goods which may break or crumble under large forces.

When compared to existing methods and systems, the invention allows for the throughput of containers (i.e. the speed of operation of a system) to be increased whilst maintaining a similar level of spillages and/or damage to container contents. In other words, by reducing or avoiding forces applied to containers higher speeds can be attained by manufacturing and packaging systems without a corresponding increase in cleaning or maintenance requirements.

In accordance with an aspect of the invention there is provided a method for handling one or more containers performed by a system comprising a platen, an input conveyor and a transfer mechanism, wherein the platen and the input conveyor each comprise a moveable container bearing surface, the method comprising: receiving the one or more containers on the input conveyor; lowering the container bearing surfaces of the input conveyor and the platen such that the containers are supported by the transfer mechanism over the input conveyor; transferring the containers from over the input conveyor to over the platen using the transfer mechanism; raising the container bearing surfaces of the input conveyor and the platen such that the containers are supported by the platen; and releasing the containers from the transfer mechanism.

According to this method the one or more containers such as trays or pots are carried across the boundary between an input conveyor (sometimes referred to as a spacing conveyor) and a platen by a transfer mechanism. By lowering the container bearing surfaces of the input conveyor and the platen relative to the transfer mechanism the containers can be laterally moved from the input conveyor to the platen without touching or contacting either the input conveyor or the platen. As such, the forces on the contents of the containers are significantly reduced in comparison to systems in which containers are dragged or pushed between different machinery.

Therefore, the risk of spillages of liquid from the containers and the risk of damage to the contents of the containers are significantly reduced. Equally, there is reduced risk that the containers are tipped, overturned or damaged. Consequently, product quality is improved, and cleaning and maintenance requirements are reduced. Furthermore, high container handling speeds and product output can be achieved.

The term conveyors will be understood as referring to handling devices configured to transfer or convey containers (or other items) placed thereon. Furthermore, the container bearing surfaces are surfaces of the input conveyor and platen on which containers are received and supported. As such, they are typically upwardly facing surfaces on which containers can be placed and can travel. For instance, if the input conveyor is a belt conveyor the container bearing surface may be an upper surface of the conveyor belt of the input conveyor.

By "lowering" and "raising" it will be understood that the container bearing surfaces of the input conveyor and the platen are moved in (at least) a vertical direction downwards and upwards respectively. In other words, the container bearing surfaces of the input conveyor and platen are moved from a respective raised position to a respective lower position during lowering and from a respective lower position to a respective raised position during raising.

Thus the container bearing surfaces are dropped and lifted relative to the transfer mechanism which preferably remains in substantially the same vertical position. Raising and lowering the container bearing surfaces may involve raising and lowering the entire platen and/or input conveyor. However, in alternative examples only a subset of the components of the platen and input conveyor may be raised and lowered. For instance, the container bearing surfaces may be raised and lowered whilst the remainder of the platen and input conveyor remain stationary.

The transfer mechanism will be understood to transfer the containers laterally from over the input conveyor to over the platen. In preferred examples the transfer mechanism is preferably stationary in a vertical direction and moves in a substantially horizontal plane. Thus in preferred examples the container bearing surfaces of the input conveyor and platen are moved in a substantially vertical direction, whilst the transfer mechanism moves containers in a substantially horizontal direction.

Following the lowering of the container bearing surfaces of the platen and input conveyor the weight of the containers is passed to the transfer mechanism such that the containers are supported or held by the transfer mechanism over the container bearing surfaces. Thus a vertical spacing or gap is formed between the containers and the input conveyor and the platen as these surfaces are lowered. Subsequently the containers may be transferred or moved laterally from a position over the input conveyor to a position over the platen by the transfer mechanism without the containers touching the input conveyor or platen. Raising the input conveyor and platen after the containers have been laterally transferred allows the containers to be supported again by the platen and safely released by the transfer mechanism. This approach minimises lateral forces applied to the containers.

In preferred examples, the transfer mechanism comprises transfer arms configured to support and transfer the containers, and wherein the method comprises closing the transfer arms around the containers received on the input conveyor such that the containers can be supported by the transfer arms. As such at least one of the transfer arms may be moved relative to the other transfer arms such that the transfer arms may be closed together and opened.

In particularly preferred examples a width of each container may increase from a base surface on which the containers typically placed when received on the container bearing surfaces towards an opposing free or top surface (e.g. a surface in which an opening is formed). For instance, each container may comprise a rim surrounding an opening, the containers may comprise a tapered cross section such the side walls of the are formed with a draft angle, and/or a protrusion extending laterally from the side walls of the container at a position above the base surface (i.e. such that the containers have a stepped cross section). In such embodiments the containers may be supported by closing the transfer arms around each container such that the spacing or distance between the transfer arms is greater than the width of the respective container at the height of the transfer arms, but less than the maximum width of the container. As such, subsequently lowering the container bearing surfaces and containers thereon causes the containers to settle onto and be supported by the surrounding transfer arms. As such the transfer arms will support the containers over the underlying container bearing surface.

This approach, in which transfer arms are placed around and adjacent to a container before the container bearing surface and container are lowered vertically offers a particularly gentle approach for supporting the container over the underlying surface which avoids any significant lateral force on the container and its contents. Equally, raising a container bearing surface over which one or more containers are supported may gently lift the containers from the transfer arms on which they are held and supported, thereby releasing the containers from the transfer arms. In such cases the transfer arms may be closed around the containers such each transfer arm is arranged or positioned adjacent to the containers but does not apply significant lateral forces to them. This avoids spillages or damage to the containers and their contents. Furthermore as the acts of lowering the container bearing surfaces and supporting the containers using the transfer mechanism occurs simultaneously the method can be performed very quickly, thereby allowing for increases in throughput.

However, in further the transfer arms may be closed around the containers such that the containers are gripped or secured between the transfer arms. As such, the transfer arms may apply lateral forces to the containers so as to restrict movement of the containers as the container bearing surfaces are lowered. Gripping the containers in this manner ensures that the containers are securely held by the transfer mechanism. Nevertheless, the lateral force involved may increase the risk of spillages or damage, especially at high operational speeds.

In preferred examples lowering the container bearing surfaces of the input conveyor and the platen comprises two phases: a first phase in which the container bearing surfaces are lowered such that the weight of the containers is supported by the transfer mechanism; and a second phase in which the container bearing surfaces are lowered further such that a gap is formed between the containers and the container bearing surfaces. Following the first phase the weight of the containers is transferred from the container bearing surfaces to the transfer mechanism (e.g. to the transfer arms discussed above). Thus, in the first phase the container bearing surfaces are lowered such that the weight of the containers is carried or borne by the transfer mechanism. Whereas in the subsequent second phase the container bearing surfaces are lowered further such that a vertical spacing or gap is formed between the container bearing surfaces and the containers that are held in position by the transfer mechanism. This gap or spacing allows the containers to be moved laterally without contacting the underlying machinery. Preferably these phases are sequential and occur continuously - i.e. so that there is no pause in the movement of the container bearing surfaces. However, this is not essential.

In preferred examples releasing the containers from the transfer mechanism comprises raising the container bearing surface of the platen. As such, the container bearing surface of the platen may be raised to support the containers and the containers are released without experiencing any significant vertical drop. As mentioned above, in some cases raising the container bearing surface of the platen may lift the containers from the transfer arms of the transfer mechanism. The transfer arms may then be opened without the containers experiencing any significant lateral forces. Alternatively, the container bearing surface of the platen may be lifted until it contacts or engages a base surface of the containers before transfer arms of the transfer mechanism are opened.

Optionally, the one or more containers received by the input conveyor each comprise an unsealed opening. Thus the containers will be "open". The containers received by the input conveyor may comprise an upwardly facing, unsealed opening that during use face away from the container bearing surfaces of the input conveyor and platen.

The one or more containers received by the input conveyor may each contain a food product. As mentioned above, particular benefits are achieved where the containers contain a food product comprising a liquid (e.g. a curry or stew), a liquid food product (e.g. soup, broth, yoghurt) and/or a fragile food product (e.g. a baked good). The method may comprise a step of dispensing a food product into the container. This dispensing step during which the container may be filled with a food product is preferably performed upstream of the input conveyor and platen. However, alternatively, a dispensing step may occur whilst the containers are on the input conveyor and/or platen.

In particularly preferred embodiments the method comprises the step of sealing the one or more containers on the platen. The sealed (or "closed") containers will retain their contents, preventing spillages. Sealing containers ensures product quality for consumers, and may reduce cleaning and maintenance requirements downstream of the system in question (i.e. at subsequent container handling locations and systems).

Preferably sealing the one or more containers comprises providing a film across an opening of each container. The film may be joined to the container around the perimeter of an opening of the container so as to seal and close the opening. For instance, the film may be provided across an upwardly facing opening of a tray, pot or other container. The film may be welded to the container and/or joined to the container by an adhesive (e.g. an adhesive initially provided to the underside of the film or to a rim of the container). Alternatively, the containers may be sealed in any other suitable manner. For instance, a lid or cover may be provided across an opening in each containers to close the containers.

Preferably the sealed containers are gastight and/or watertight. Thus gases and liquids are restricted from entering or exiting the container. For instance, the seal may be a hermetic seal being impervious to gases and liquids. Such seals may prevent the contents of the containers from escaping or spilling. Equally these seals can protect the contents of the containers. For instance, a gastight and watertight seal is of particular benefit in the food packaging industry since it may prevent or slow the spoilage of food products.

The containers may be formed of any suitable material including polymers such as polypropylene (PP), amorphous polyester terephthalate (A-PET), crystallised polyester terephthalate (C-OPET), expanded polystyrene (EPS), polystyrene (PS), polyvinyal chloride (PVC), as well as metals or alloys such as aluminium foil (including smooth wall aluminium foil), and cardboard. These materials are suitable for use with a wide variety of food products and can be easily formed and manufactured.

The film may be a single or multi-layer film and may comprise any suitable material including many polymers. In preferred examples the film is a gas barrier film comprising layers of polyester (PS) or polypropylene (PP), ethylene vinyl alcohol (EVOH), and/or polyethylene (PE) or polypropylene (PP). Such multi-layer films may comprise adhesives to cement layers together. Additionally or alternatively, the film may comprise a metal foil (e.g. of aluminium), or the film may be a paper film being cellulose-based and/or comprise at least one paper layer.

In particularly preferred examples the system performing the method comprises a traysealer. As such, the containers on the platen may be quickly and efficiently sealed using the traysealer. The traysealer may comprise a heat sealing tool having a lower tool part on which the container(s) to be sealed may be positioned, and an upper tool part comprising a contoured heated element or plate. The lower tool half and the upper tool part may be brought together with a film between the container(s) and the upper tool part, such that the upper tool part engages the film and the underlying containers. The upper tool part may then be heated to join the film to the container(s) across an opening.

Preferably the platen forms part of a lower tool part of a traysealer and sealing the one or more containers on the platen comprises: providing a film between the containers on the platen and an upper tool part; bringing the platen and the upper tool part together such that the upper tool part engages the film and the underlying containers; and heating the upper tool part so as to join the film to the containers.

Preferably the platen forms part of a lower tool part of a traysealer and sealing the one or more containers on the platen comprises: providing a film between the containers on the platen and an upper tool part; bringing the platen and the upper tool part together such that the upper tool part engages the film and the underlying containers; and heating the upper tool part so as to join the film to the containers. Raising the platen (or an alternative lower tool part), as opposed to moving the upper tool part, provides the benefit that the large and complex heated upper tool part may be held stationary throughout the method.

Alternatively, the containers may be sealed using a film in a different manner. For instance the containers may be laser sealed by providing film across an opening of the container and applying a laser to the film or container around a perimeter of the opening. The laser may weld the film to the container and/or activate an adhesive provided between the film and container (e.g. an adhesive initially provided to the underside of the film or to a rim of a tray or other container) such that the film is adhered to the container.

In preferred examples the method may comprise the step of filling the containers with a purge gas before sealing the container. The purge gas may displace air or other atmospheric gases from within the container. A purge gas may be inert or un-reactive with the contents of the container. For instance, with many food products the lifespan of the product may be increased by removing oxygen from a container prior to sealing the container. This may be achieved by performing the method in a controlled (e.g. oxygen free) environment. Alternatively, or additionally the container handling system may be provided within a closed environment filled with a purge gas that is maintained at, or just above, atmospheric pressure. As containers pass through such a system the purge gas will fill the internal volume of the trays so as to evacuate oxygen and/or other atmospheric gases. This purge gas which may be sealed in the container by the film is preferably inert and non-reactive with the packaged contents of the container.

Alternatively or additionally, the containers on the platen may be processed in a different manner than sealing. For instance, the containers may be labelled or printed. Equally, a product (e.g. a food product) may be dispensed or provided into the containers. For instance, the containers received by the input conveyor may be partially full and an additional product may be inserted into the containers at the platen. In some embodiments multiple processing steps may be performed on each container on the platen- e.g. containers may be both filled and sealed. As such, it will be seen that the method may comprise the step of processing the containers transferred to the platen in any suitable manner.

In preferred examples, lowering the container bearing surfaces of the input conveyor and the platen comprises lowering the container bearing surface of the input conveyor and/or the container bearing surface of the platen such that the containers are supported by the transfer mechanism with a vertical gap of 5 mm or more between the containers and the respective container bearing surface, preferably with a vertical gap of 8 mm, more preferably with a vertical gap of 10 mm or more. These gaps are sufficient to allow for containers to be laterally transferred from over the input conveyor to over the platen without touching either the input conveyor or platen.

For instance, the lowering and raising steps may involve lowering and raising the container bearing surface of the input conveyor and/or the platen by at least 5 mm, preferably at least 10 mm, more preferably at least 15mm. Additionally, or alternatively, the lowering and raising steps may involve lowering and raising the container bearing surface of the input conveyor and/or the platen by 50 mm or less, preferably 30 mm or less, and more preferably 25mm or less. Therefore in preferred embodiments the container bearing surface of the input conveyor and/or the platen are raised and lowered in each of the raising and lowering steps by a vertical distance in a range from 5 to 50 mm, more preferably from 10 to 30 mm, more preferably still from 15 to 25 mm.

These movement ranges achieve a suitable gap between the containers supported by the transfer mechanism and the underlying input conveyor and/or platen without excessive energy or machinery requirements associated with larger movements. Having said this larger gaps allow more flexibility since containers may be safely transferred even if there are variations in how specific containers are held or supported by the transfer mechanism. In preferred examples the same or substantially the same sized vertical gap is formed between the containers and the container bearing surface of each of the platen and the input conveyor. However, this is not essential and in further examples the container bearing surfaces of the input conveyor and platen may be lowered by different amounts such that different gaps are formed.

In the examples discussed above in which lowering the container bearing surfaces involves two phases the container bearing surfaces may be lowered by approximately 10 mm (e.g. between 5 and 15 mm) in each phase.

Preferably each container is supported by the transfer mechanism at a position above the centre of mass of said container and/or the centre of mass of the container and its contents. For instance, the transfer mechanism may engage or grip the containers closer to a top of the containers than the base of the containers and/or the containers may be supported by a rim or other projection which is positioned above the centre of mass of the container and/or the centre of mass of the container and its contents. This reduces the risk of the containers tipping or spilling as the transfer mechanism moves the containers from over the input conveyor to over the platen. Consequently, the speed of the transfer may be increased. For instance, in the examples above in which the width of the containers increases between the base of the container and the top of the container, there may be provided a protrusion or rim by which the containers may be supported by the transfer mechanism at a position closer to the top of the container than the base.

As mentioned above, the input conveyor (sometimes referred to as a spacing conveyor) will be raised and lowered between a raised position and a lowered position. Preferably the input conveyor is configured such that it may be operated to convey articles received thereon in both its raised position and lowered position. Thus the input conveyor is able to receive and transfer containers in both positions. This may allow an input conveyor to receive and prepare containers (e.g. a new batch of container) for transfer as one or more preceding containers is transferred to the platen by the transfer mechanism. This may improve throughput of containers.

Preferably the system comprises an input conveyor drive mechanism configured to drive the input conveyor, wherein the input conveyor drive mechanism is stationary as the container bearing surface of the input conveyor is raised and lowered. Thus the input conveyor drive mechanism is static during the method, not being raised and lowered with the container bearing surface. Drive mechanisms of conveyor systems are typically relatively heavy, fragile and more difficult and expensive to maintain than other components of a conveyor system (e.g. the belt and rollers of a belt conveyor). As such, energy and equipment requirements can be reduced significantly if the drive mechanism of the input conveyor remains stationary as the input conveyor itself is raised and lowered. However, this is not essential and in alternative examples the input conveyor drive mechanism may be raised and lowered together with the container supporting surface. For instance, the input conveyor may be raised and lowered as a single unit.

The input conveyor may be any suitable conveyor configured to transfer or convey containers, including (but not limited to) a belt conveyor, modular belt conveyor, walking beam, roller conveyor, chain conveyor, wire conveyor, or slat conveyor.

In particularly preferred examples the input conveyor is a belt conveyor comprising an input belt, the container bearing surface being an outer surface of the input belt. Belt conveyors typically comprise a continuous or endless belt that extends around two or more rollers. The rollers typically include a drive roller which is driven by and rotates under the action of a drive mechanism, which typically comprise a motor and gearing. Friction between the drive roller and the belt causes the belt to move around the rollers. Thus, in these examples the container bearing surface and the input belt of the input conveyor may be raised and lowered by raising and lowering one or more rollers of the input conveyor.

Preferably the tension of the input belt is substantially constant when the container bearing surface of the input conveyor is raised and lowered. Thus the tension of the input belt may be substantially constant when the container supporting surface is in its raised and lowered positions. Additionally, in preferred examples the tension of the input belt remains substantially constant as the input conveyor is raised and lowered. Since the tension in the input belt is maintained, the belt perimeter - i.e. the length of the path along which the belt extends or travels in use when fitted to the conveyor - remains substantially constant in both the raised and lowered positions. Consequently, there is less chance of the belt being slipped from the rollers of the input conveyor during vertical movement and the input belt may be operated to transfer containers throughout the method. In preferred examples, the tension in a belt conveyor is approximately 400N (approximately 40 kg) during and is preferably between 300 and 500 N (between approximately 30 and 50 kg) during. Under this tension a belt may stretch in length by approximately 0.5%, for instance between 0.25 and 0.75%. As such, the free length of the belt - the length of the belt when purchased and before fitting to the conveyor - is slightly shorter than the belt perimeter when the belt is fitted to the conveyor and tensioned.

The tension in the belt will necessarily be maintained if all rollers of the input conveyor are raised and lowered together as the container bearing surface is raised and lowered (e.g. if the entire input conveyor is raised and lowered as a single unit). However, maintaining tension is more difficult where only a portion or subset of the input conveyor is raised and lowered with the container bearing surface - e.g. where the drive mechanism and drive roller of the input conveyor is static as previously discussed. Nevertheless belt tension may be maintained even as different rollers of a conveyor move relative to one another as the container bearing surface is raised and lowered if the total length of this path along which the belt travels (the belt perimeter) remains substantially constant.

For instance, substantially constant tension in the input belt may be maintained if the input conveyor comprises a biased roller configured to maintain tension in the input belt. By "biased" it will be understood that the tension roller is configured to contact the input belt and is urged against the input belt maintaining an appropriate tension in the input belt and suitable belt perimeter as the container supporting surface of the input conveyor is raised and lowered. The tension roller may be biased against the input belt by a spring or other elastic member. Alternatively, appropriate tension in the input belt may be maintained if the rollers are arranged such that the belt perimeter is of constant length when the container bearing surface is in each of its raised and lowered positions. For instance, a constant belt perimeter may be maintained if the reduction in the distance between any first pair rollers is compensated by a corresponding increase in the distance between a different second pair of rollers.

Preferably the system comprises an input conveyor drive mechanism configured to drive the input belt via a drive roller, and wherein a contact length between the input belt and the drive roller is substantially the same when the container bearing surface of the input conveyor is raised and lowered. This a contact length between the input belt and the drive roller is substantially the same when the container bearing surface of the input conveyor is in its raised and lowered positions. The contact length is understood to be the distance along the perimeter of the drive roller along which the input belt is in contact with the drive roller. The contact length defines how much torque may be transferred from the drive roller to the input belt without the input belt slipping. Where the input conveyor is raised and lowered as a single unit the positional relationship between the drive roller and input belt will remain unchanged as the container bearing surface is moved. However, where the drive mechanism and drive roller of the input conveyor remain stationary as the container bearing surface moves a suitable contact length may be maintained by careful position of the remaining rollers of the input conveyor. Changes in positions of each roller relative to the drive mechanism may be compensated by corresponding changes in the position of other rollers of the input conveyor. For instance, the contact arc length may be maintained between 60 and 140 mm, more preferably between 80 and 120 mm, more preferably at approximately 100 mm. Such figures are well suited for use with belts with widths of approximately 200mm but can be varied as necessary to maintain appropriate drive forces. In preferred examples the wrap angle about which a belt contacts the drive roller is between 90 and 180 degrees, more preferably between 120 and 180 degrees.

Preferably the platen and input conveyor are mechanically linked such that the container bearing surfaces of the platen and the input conveyor are simultaneously raised and lowered by a single raising and lowering mechanism. For instance the platen and input conveyor (and/or their respective container bearing surfaces) may be raised and lowered together by a single hydraulic or pneumatic ram, or a single motor. In preferred embodiments where the input conveyor is a belt conveyor, the platen may be mechanically linked to one or more rollers of the input conveyor such that raising and lowering the platen causes said rollers and the container bearing surface defined by an outer surface of the input belt extending around these rollers to also be raised and lowered. This simplifies handling of the platen and input conveyor and reduces installation and maintenance costs. However, this is not essential and the container supporting surfaces of the platen and input conveyor may be provided with separate raising and lowering mechanisms (e.g. individual hydraulic or pneumatic rams or motors).

More preferably still the system may comprise a single raising and lowering mechanism configured to: lower the container bearing surface platen such that the gripped containers are supported by the transfer mechanism above the surface of the platen; and to raise the container bearing surface of the platen such that containers positioned thereon may be processed. For instance, as discussed above, the single raising and lowering mechanism may be configured to raise the container bearing surface of the platen such that containers positioned thereon are engaged by the upper tool part of a traysealer (e.g. with film positioned therebetween so as to seal the containers). Alternatively, containers raised in this manner may be easier for a worker to inspect or fill. In particular, the single raising and lowering mechanism may be configured to raise the container bearing surface of the platen above (i.e. to a higher position in the vertical direction) the container bearing surface of the input conveyor such that containers positioned on the platen may be processed whilst the input conveyor remains at a constant height. This may allow the input conveyor to continue operating such that it may receive or accumulate further containers whilst a batch of containers on the platen are processed. Therefore the processing speed may be increased. In other words, said single raising and lowering mechanism may be configured to: simultaneously lower the container bearing surfaces of the platen and the input conveyor such that the gripped containers are supported by the transfer mechanism over the container bearing surfaces of the platen and the input conveyor; and to raise the container bearing surface of the platen such that containers positioned thereon may be processed whilst the container bearing surface of the input conveyor remains at a substantially constant (vertical) position. Thus whilst the platen and the input conveyor may be mechanically linked such that their container bearing surfaces may be lowered together to enable the safe transfer of containers the mechanical linkage preferably also allows the container bearing surface of the input conveyor to be raised over the input conveyor during a processing (e.g. sealing, inspection) step.

Providing a single raising and lowering mechanism is particularly efficient since a single component is able to both lower the container bearing surface of the platen whilst the containers are transferred and raise the surface whilst the containers are processed at the platen. There is no need for separate mechanisms to raise and lower the platen. As such, the system is particularly efficient, requiring less space and fewer resources to manufacture and operate. Preferably, the platen may be driven by in the vertical direction by a single hydraulic or pneumatic ram, a single motor or any other suitable raising and lowering mechanism.

Preferably the containers received on the input conveyor are received from an upstream delivery conveyor (sometimes referred to as a take-off conveyor). Said upstream delivery conveyor may form part of the system discussed above. Alternatively containers may be received on the input conveyor from any other suitable means including by manual transfer.

In particularly preferred embodiments the delivery conveyor comprises a moveable container bearing surface having a downstream end adjacent to the input conveyor and an upstream end furthest from the input conveyor; and wherein the method comprises: raising and lowering at least the downstream end of the container bearing surface of the delivery conveyor as the container bearing surface of the input conveyor is raised and lowered.

Hence throughout the method there is no significant height difference or vertical discontinuity between container bearing surfaces of the delivery conveyor and input conveyor. Therefore, despite the movement of the container bearing surface of the input conveyor, the containers travelling between the delivery conveyor and input conveyor are not exposed to high forces. This reduces spillages and damage to the contents of the containers and allows for high processing speeds to be achieved.

In preferred examples the upstream end of the container bearing surface of the delivery conveyor remains stationary as the downstream end is raised and lowered. Thus the container bearing surface of the delivery conveyor may rotate about its upstream end. Indeed, in particularly preferred examples the upstream end of the delivery conveyor comprises a pivot that is fixed in position such that the delivery conveyor rotates or "nods" as the input conveyor is raised and lowered. This provides a smooth interface between the input conveyor and upstream equipment and machinery.

To further reduce forces applied to containers, preferably the upstream end of the container bearing surface of the delivery conveyor remains stationary at a vertical position at the midpoint of the range of movement of the upstream end of the delivery conveyor and/or the midpoint of the range of movement of the container bearing surface of the input conveyor as these surfaces are raised and lowered. This minimises the angle by which the container bearing surface of the delivery conveyor must rotate relative to the horizontal and thereby avoids excessive changes in vertical height across the delivery conveyor. Therefore, the height across which the containers must be raised and lowered as they pass across the nodding delivery conveyor and the risk of spillages are reduced. In preferred examples the container bearing surface of the delivery conveyor rotates within an angle range of +5 degrees and -5 degrees relative the horizontal, more preferably within a range of +2 degrees and - 2 degrees relative the horizontal, more preferably still within a range of +1.5 degrees and - 1.5 degrees relative to the horizontal, more preferably still within a range of +1.28 degrees and - 1.28 degrees. However, this is not essential and the upstream end of the container bearing surface of the delivery conveyor may be positioned at the same or approximately the same vertical height as the raised or lowered position of either its downstream end or the raised or lowered position (e.g. such that the container bearing surface rotates through an angle of 0 degrees to 4 degrees relative to the horizontal).

Nevertheless, in further examples the upstream and downstream ends of the container bearing surface of the delivery conveyor are raised and lowered together. In such examples the container bearing surface of the delivery conveyor remains level as the downstream end of the delivery conveyor is raised and lowered.

In some examples, the downstream end of the delivery conveyor may be mechanically linked to the input conveyor. Thus the platen, input conveyor and delivery conveyor may all mechanically linked or articulated and may be moved by a single raising and lowering mechanism. Nevertheless, in further examples a delivery conveyor may be provided that is static and does not move with the input conveyor and/or platen.

The delivery conveyor may comprise any of the optional or preferable features discussed above with reference to the input conveyor. These features may provide corresponding benefits. For instance, the delivery conveyor may be any suitable conveyor, including (but not limited to) a belt conveyor, roller conveyor, chain conveyor or slat conveyor. However, as with the input conveyor, preferably the delivery conveyor is a belt conveyor and may comprise a delivery belt, the container bearing surface being an outer surface of the delivery belt. Where the delivery conveyor is a belt conveyor the tension in a delivery belt may preferably be maintained substantially constant throughout the method through the techniques discussed above with reference to the input conveyor. Additionally or alternatively, the delivery conveyor may be driven by a delivery conveyor drive mechanism and/or a drive roller that preferably remains stationary as the delivery conveyor is moved. In such examples, the delivery conveyor may be configured such that the contact length between the delivery belt and drive roller of the delivery conveyor is substantially the same when the container bearing surface of the input conveyor is in each of its raised and lowered positions. Alternatively, the delivery conveyor may be moved (e.g. raised and lowered and/or rotated) as a single unit.

In preferred examples, the method may comprise varying the speed of operation of the input conveyor and/or delivery conveyor as the container bearing surfaces of these conveyors are moved (i.e. raised and lowered and/or rotated). This may minimise variation in the speed at which containers are transported by the conveyors avoids unnecessary forces being applied to the containers and their contents and therefore avoids spillages or damage to the containers and their contents. For instance, when the input conveyor and delivery conveyor are belt conveyors, the input to the motors and drive rollers may be varied as the container bearing surfaces are moved to ensure the belts of each conveyor (and the containers supported thereon) maintain a substantially constant speed. The variation in speed of operation may accommodate variations in the forces being applied to the belts of the conveyor as the position of the belt and the non-driven rollers of the conveyor move relative to the motor and drive roller. This step may take the form of software compensation of the speed of the motor applied by a controller of the system.

Preferably the method comprises the subsequent steps of lowering the container bearing surface of the platen such that the containers are supported by the transfer mechanism over the platen; transferring the containers from over the platen to an output conveyor using the transfer mechanism; and releasing the containers from the transfer mechanism. As such, containers that have been received on and/or processed on the platen may be transferred away or discharged from the platen by the transfer mechanism using substantially the same process as discussed above. These steps may involve any of the optional or preferred features previously discussed.

Therefore, the method includes discharging the containers from the platen using an output conveyor (although in further examples the containers may be discharged and transferred away using container handling components or machines, including by manual handling). These steps may occur after the containers have been processed on platen - e.g. after the containers have been filled, sealed, labelled and/or printed upon. The output conveyor may comprise any of the optional or preferable features discussed above with reference to the input conveyor and delivery conveyor. The output conveyor may be any suitable conveyor, including (but not limited to) a belt conveyor, roller conveyor, chain conveyor or slat conveyor.

Subsequently the method may further comprise conveying the containers away from the platen using the output conveyor. The containers may subsequently be processed in other manners - e.g. being labelled, printed, boxed, distributed and/or sold.

In particularly preferred examples the output conveyor and/or a container bearing surface of the output conveyor remains substantially stationary in the vertical direction throughout the method. For instance, containers may be dragged from the platen to the static output conveyor by the transfer mechanism or released over the output conveyor. This is particularly preferred for methods and systems where the containers are sealed on the platen (e.g. using a tray sealer as discussed above). In these embodiments, although the containers may be subject to high forces as they are transferred to the static output conveyor the contents of the closed containers are prevented or restricted from spilling by the sealed openings. Thus design and construction of the system can be simplified without increasing risk of spillages. For instance, a container bearing surface of the output conveyor may be positioned such that it is at the same height as and/or is substantially parallel with the platen in its lowered position. In preferred examples a container bearing surface of the output conveyor is positioned at a height of the container bearing surface of the platen and/or input conveyor in its respective lowered position.

Nevertheless, in further examples the output conveyor and/or the container supporting surface of the output conveyor may be movable and the method may comprise lowering the container supporting surfaces of the platen and the output conveyor before the containers are transferred from the platen to the output conveyor. This is preferred where the containers contain a fragile product or are unsealed since forces on the containers are reduced. The output conveyor and platen may be mechanically linked such that the platen and output conveyor may be raised and lowered by a single raising and lowering mechanism (e.g. a motor or hydraulic ram). The output conveyor may comprise a static output conveyor drive mechanism which does not move as the container bearing surface is raised and lowered. Where the output conveyor is a belt conveyor comprising an output belt, tension in the output belt and the contact length between the output belt and a drive roller of the output conveyor may be maintained at substantially constant levels. Equally, in further examples the output conveyor may be configured to rotate in a similar manner to the delivery conveyor, such that an upstream end of its container bearing surface furthest from the platen remains substantially static whilst the downstream end of the product supporting surface of the output conveyor is raised and lowered with the platen.

Regardless of whether the output conveyor is static or moveable, the platen may optionally be lowered as or after the containers on the platen are supported by the transfer mechanism (i.e. as or after the weight of the containers is passed to the transfer mechanism) and before the containers transfer the containers from over the platen to the output conveyor. For instance, the platen and input conveyor may both be lowered before the containers are transferred to the output conveyor. This is particularly preferred when handling multiple sequential batches of containers (as is discussed further below). In this case the containers supported by the transfer mechanism will be lifted from and supported over the platen before they are conveyed and discharged to the output conveyor. The manner in which the containers on the platen are held or gripped by the transfer mechanism may and involve corresponding steps as for the containers received on the input conveyor. These steps may occur substantially simultaneously with the steps performed in relation to the containers received on the input conveyor.

Preferably the method comprises repeating the steps discussed above (including any of the steps described as optional or preferred) as the system handles subsequent containers or batches of containers. The containers transferred to the platen may be removed either manually or using an output conveyor as previously discussed. To enable the process of be repeated the transfer mechanism may reciprocate, being returned to its starting position after products are transferred to the platen and/or the output conveyor such that the transfer mechanism is capable of receiving and supporting the subsequent containers received on the input conveyor and the method may restart.

According to a further aspect of the invention there is provided a for handling two sequential batches of containers each batch comprising one or more containers; wherein the two sequential batches of containers include a downstream batch and a subsequent upstream batch, and wherein each batch of containers is handled according to the method of any previous claim; and wherein the method comprises: simultaneously transferring the downstream batch of containers from the platen to an output conveyor and transferring the upstream batch of containers from over the input conveyor to over the platen using the transfer mechanism. Through this method it will be appreciated that throughput may be further increased by simultaneously transferring sequential batches of containers to and from the platen. A first, downstream batch is discharged from the platen onto an output conveyor as the subsequent, upstream batch is received on the platen from the input conveyor.

In more detail, the first downstream batch of containers first are transferred to the platen as previously discussed and may be processed on the platen. For instance, the downstream batch of containers may be filled, sealed, labelled and/or printed on the platen. Preferably, as the first, downstream batch of containers are processed a subsequent, upstream batch of containers are received on the input conveyor. Therefore, the processed downstream batch can be discharged from the platen and the new upstream batch of contains can be transferred to the platen for processing simultaneously. This is particularly efficient.

Preferably the downstream batch of containers on the platen and the new upstream batch of containers on the input conveyor are supported by the transfer mechanism substantially simultaneously. For instance, the transfer mechanism may have two laterally spaced support portions, a first support portion configured to support or hold a downstream batch of containers and a second gripping portion configured to support or hold a subsequent, upstream batch of containers. The upstream and downstream support portions may form laterally spaced section of the same transfer arms. In such approaches container bearing surfaces of the input conveyor and platen may be lowered, again preferably substantially simultaneously, to transfer the weight of the upstream and downstream batches of containers to the transfer mechanism before the transfer mechanism is operated to laterally move both batches of containers together. In such examples, the transfer mechanism simultaneously transfers the downstream batch of containers from over the platen to the output conveyor and transfers the upstream batch of containers from over the input conveyor to over the platen. The container bearing surfaces of the input conveyor and platen are subsequently raised (again preferably simultaneously) and both batches of containers may be released by the transfer mechanism (again preferably simultaneously). Thus, the previously processed downstream batch of containers can be transferred away from the platen by the output conveyor as the upstream batch of containers are processed on the platen.

Furthermore, it will be appreciated that this method can be further repeated as the system handled further batches of containers. For instance, a third batch of containers may arrive at the input conveyor as the previously described upstream batch is on the platen (e.g. as the upstream batch is being processed). The third batch of containers may be handled and transferred to the platen in the same manner as previously described for the upstream batch, whilst simultaneously the upstream batch may be discharged and transferred away from the platen in the same manner as previously described in relation to the downstream batch.

In these examples, it will be appreciated that the transfer mechanism is capable of handling two batches of containers simultaneously. As mentioned above, the transfer mechanism may comprise a first support portion configured to support one or more containers on the platen (e.g. a downstream batch) whilst a second support portion is configured to support one or more containers on the input platen (e.g. an upstream batch). Thus the first support portion is positioned downstream of the second support portion. The transfer mechanism is configured to move such that simultaneously: the containers held by the first support portion are transferred from over the platen to the output conveyor; and the containers held by the second support portion are transferred from over the input conveyor to over the platen. The transfer mechanism may then release both batches of containers and return to its starting position to receive a further batch of containers, completing a reciprocal and repeating motion.

This method for handling multiple batches of containers may involve and be combined with any of the optional or preferable features of the methods and systems previously described and provide corresponding benefits.

According to a further aspect of the invention there is provided a container handling system comprising: a platen and an input conveyor each of which comprise a moveable container bearing surface configured to move between a respective raised position and a respective lowered position; and a reciprocating transfer mechanism configured to: support one or more containers previously received on the input conveyor as the container bearing surface of the input conveyor is lowered from its raised position to its lowered position, such that the one or more containers are supported by the transfer mechanism over the input conveyor; and transfer one or more containers from over the input conveyor to over the platen when the input conveyor and platen are in their respective lowered positions. As such, the transfer mechanism is configured to hold the containers above the input conveyor as its container bearing surface is moved to its lowered position. A vertical gap may be formed between the containers and the container bearing surfaces of the input conveyor and platen, allowing the containers to be transferred laterally from over the input conveyor to over the platen without experiencing significant lateral forces.

Therefore systems according to this aspect of the invention offer corresponding benefits as the methods discussed above. In particular, the risk of spillages or damage to the contents of the containers may be reduced, cleaning and maintenance requirements are reduced and product quality and throughput may be improved.

Preferably the container handling system is configured to perform a method comprising any method according to the preceding aspects of the invention. Thus, the container handling system may be configured to perform any of the optional or preferable steps previously discussed and may comprise any of the components and features previously described with reference to the preceding aspects of the invention.

For instance, the transfer mechanism of the container handling system may comprise transfer arms configured to support and transfer the containers, and wherein the method comprises closing the transfer arms around the containers received on the input conveyor such that the containers can be supported by the transfer arms. Equally, the system may be configured such that the container bearing surfaces of input conveyor and/or the platen can be lowered in two phases: a first phase in which the container bearing surfaces are lowered such that the weight of the containers is supported by the transfer mechanism; and a second phase in which the container bearing surfaces are lowered further such that a gap is formed between the containers and the container bearing surfaces.

Similarly, in preferred examples, the container handling system may comprise a traysealer or other sealing unit configured to seal one or more containers on the platen. The sealing unit may be configured to provide a film across an opening of each container. The sealing unit may be configured to seal an upwardly facing opening in each of the one or more containers with film such that the opening is closed, and the contents of the container may be prevented from leaving the container. Preferably the sealing unit is configured to form a gastight and/or watertight seal across an opening of the container.

Where the container handling system comprises a traysealer the platen may form a lower tool part of the traysealer. The platen may be configured to be brought together with an upper tool part of the traysealer such that the upper tool part engages a container on the platen and a film provided between the container and the upper tool part. For instance the system may be configured to raise the container bearing surface of the platen relative to the input conveyor. The traysealer may be configured to heat the upper tool part such that if a container is brought into engagement with the upper tool part with a film provided between the container and the upper tool part, the film may be joined to the container to seal an opening in the container. Additionally or alternatively the system may comprise alternative processing unit(s), such as a label maker configured to label containers on the platen, a printer configured to print onto the containers on the platen or product dispensing unit configured to dispense product (e.g. a food product) into the container.

The distance between the respective raised position and lowered position of the container bearing surfaces of the input conveyor and/or the platen may be at least 5 mm, more preferably at least 10 mm, more preferably at least 15mm. Equally, the respective raised position and lowered position of the input conveyor and/or the platen may be 50 mm at most, preferably 30 mm at most, more preferably 25 mm at most. As such, the range of motion of the container bearing surfaces of each of the input conveyor and the platen during use may be in the range of 5 to 50 mm, more preferably 10 to 30 mm, more preferably still 15 to 25 mm. In particularly preferred examples the distance between the raised and lowered positions of each of the input conveyor and the platen is 20 mm.

Preferably the transfer mechanism is configured to support each container at a position above the centre of mass of said container and/or the centre of mass of the container and its contents.

Preferably the system comprises an input conveyor drive mechanism configured to drive the input conveyor, and wherein the input conveyor is arranged such that the input conveyor drive mechanism remains stationary as the container bearing surface of the input conveyor is raised and lowered.

Preferably the input conveyor is a belt conveyor comprising an input belt, the container bearing surface being an outer surface of the input belt. Other suitable forms of conveyors may also be used. The system is preferably configured such that the tension of the input belt is substantially the same when the container bearing surface is in its raised and lowered positions. Preferably the system comprises an input conveyor drive mechanism configured to drive the input belt via a drive roller, and wherein a contact length between the input belt and the drive roller is substantially the same when the container bearing surface is in its raised and lowered positions. Preferably the platen and input conveyor are mechanically linked such that the container bearing surfaces of the platen and the input conveyor are simultaneously raised and lowered by a single raising and lowering mechanism.

Preferably the system further comprises an upstream delivery conveyor, and wherein the input conveyor is configured to receive containers from the delivery conveyor. Preferably the delivery conveyor comprises a moveable container bearing surface having a downstream end adjacent to the input conveyor and an upstream end furthest from the input conveyor; and wherein the delivery conveyor is configured such that the downstream end is raised and lowered with the container bearing surface of the input conveyor whilst the upstream end remains stationary.

Preferably the system comprises an output conveyor configured to discharge or transfer containers away from the platen. Preferably the transfer mechanism is further configured to releasably support one or more containers on the platen and transfer one or more containers from the platen (or from over the platen) to the output conveyor. Preferably the output conveyor and/or a container bearing surface of the output conveyor is configured to remain stationary as the container bearing surfaces of the input conveyor and platen are raised and lowered.

Preferably the system is configured to simultaneously handle two sequential batches of containers each of which comprises one or more containers. In particularly preferred examples the transfer mechanism is configured to simultaneously transfer a downstream batch of containers from the platen to the output conveyor and a subsequent upstream batch of containers from over the input container to over the platen. This is a particularly efficient manner of transferring containers which can achieve high throughput without the risk of spillages or damage to the contents of the containers.

In the aspects of the invention discussed above, a gap is achieved between containers supported or held by the transfer mechanism and the underlying input conveyor and platen by relative movement of the container bearing surfaces of the input conveyor and the platen. The input conveyor and platen are lowered to create a vertical clearance or spacing between their container bearing surfaces and the containers. This clearance allows lateral movement of the supported containers without contact between the containers and the platen or input conveyor.

Separately, it has also been recognised by the inventors that a similar gap or clearance between containers and an underlying conveyor or platen could alternatively be achieved by gripping the containers with a transfer mechanism, and raising the gripped containers using the transfer mechanism. In other words, the relative vertical movement between the gripped containers and the input conveyor and/or platen could be achieved by raising the transfer mechanism and/or the containers instead of the lowering the input conveyor and platen (as discussed above).

However, this potential alternative approach has significant drawbacks, especially as processing speeds and throughputs are increased. These potential alternative transfer mechanisms would be required to quickly grip, lift, transfer and release the containers - as opposed to the transfer mechanism of the present invention that is only required to grip and transfer containers. Designing a single mechanism that is capable of achieving the additional operations is difficult. Moreover, this potential alternative transfer mechanism will necessarily be larger than the examples of present invention described herein because the mechanism must perform additional operations.

This increase in size, weight and complexity of a transfer mechanism is problematic when processing speeds increase because the transfer mechanisms must be highly dynamic. Larger moving mechanisms would require significant extra support due to the additional inertia and forces involved, and have significantly greater energy and power requirements. These issues are exacerbated when the transfer mechanisms are configured to convey the containers over larger distances.

Therefore, systems in accordance with the invention which lower the container bearing surfaces of conveyors and/or platens are easier to design and require fewer resource to manufacture and operate than potential alternative options which raise contains over these surfaces.

The potential alternative transfer mechanisms which raise contains would need to quickly move the containers in a reciprocating manner in both a vertical direction to lift and lower the containers and a lateral direction from over the input conveyor to over the platen to transfer the containers, whilst also rapidly gripping and releasing containers. Combining these dynamic actions in a single transfer mechanism increases the complexity and energy requirements of the system as a whole.

### BRIEF DESCRIPTION OF DRAWINGS

Figures 1a show schematically a side view of a container handling system in accordance with an embodiment of the invention; Figures 1b to 1j show schematically sequential stages in a method of handling containers in according to an embodiment of the invention performed by the container handling system of Figure 1a.
Figure 2a shows a perspective view of a container handling system in accordance with an embodiment of the invention; Figures 2a and 2b show components of said container handling system in side view.
Figures 3a and 3b show cross sectional views of components of a container handling system in accordance with an embodiment of the invention in cross section; Figure 3c shows further components of said container handling system from a side view.
Figures 4a to 4d schematically show sequential steps of a method for handling continuers in accordance with the invention.
Figures 5a to 5d schematically show sequential steps of a method for handling continuers in accordance with the invention.
Figures 6a to 6d schematically show sequential steps of a method for handling continuers in accordance with the invention.

### DETAILED DESCRIPTION

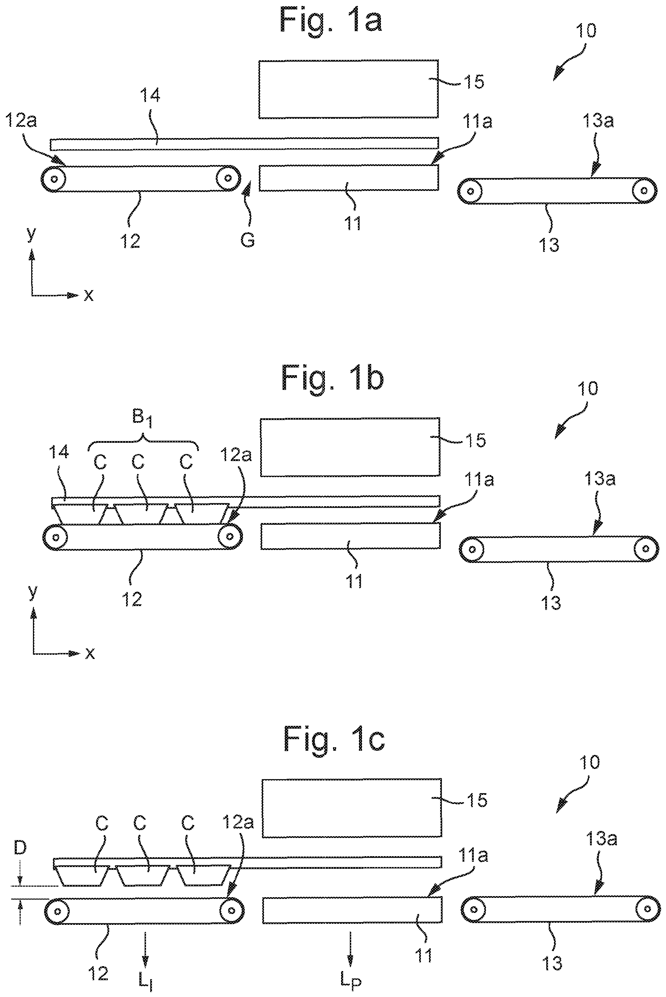

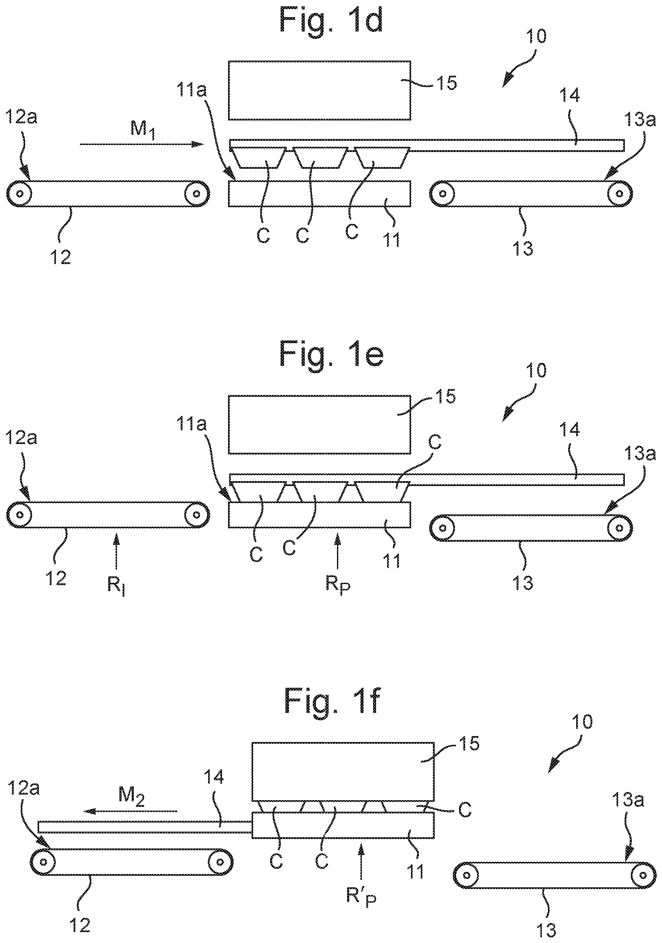

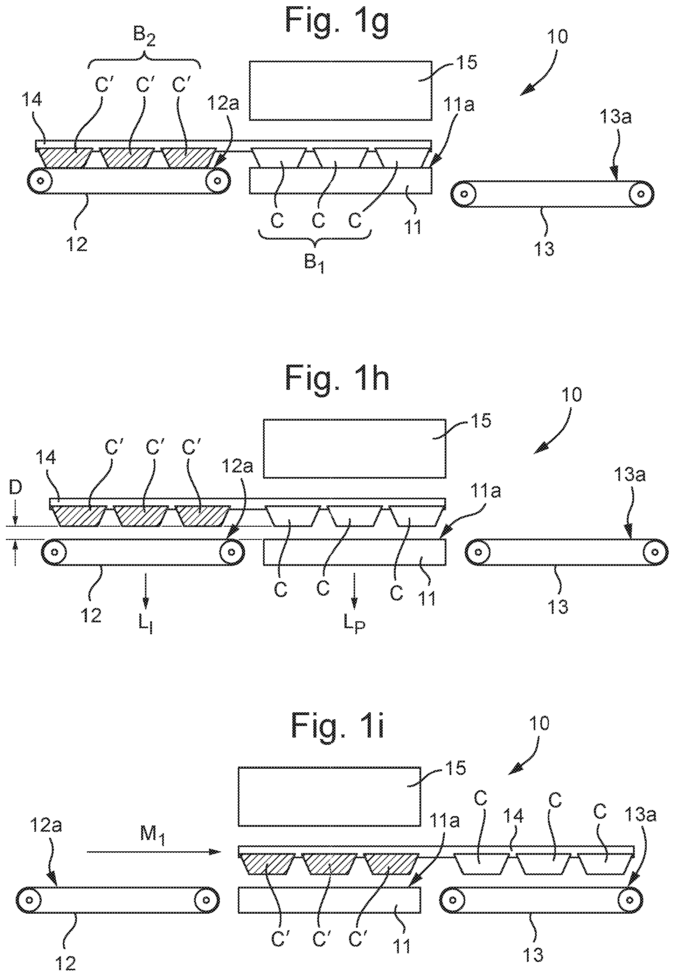

Figures 1a to 1j each schematically show a container handling system 10 comprising a platen 11, input conveyor 12, output conveyor 13 and a transfer mechanism 14. The system 10 further comprises a traysealer formed by the platen 11, which acts as a lower tool part of the traysealer, and a heated upper tool part 15 (nevertheless in further examples systems could comprise additional or alternative container processing units such as dispensers, labellers and/or printers). Sequential steps and processes of a method performed using this system are schematically illustrated in Figures 1b to 1e. This method avoids containers experiencing high forces as they are transferred between the input conveyor 12 and platen 11 during which the containers must traverse gap G shown on Figure 1a. Optional continuations of the method are shown in Figure 1f and Figures 1g to 1j.

The input conveyor 12 and output conveyor 13 are both belt conveyors (although this is not essential) and are each configured to transfer and move containers in a direction parallel to the x-axis shown in Figure 1a. The input conveyor 12 is configured to transfer containers towards the platen 11, whereas the output conveyor 13 is configured to transfer containers away from the platen 11.

The platen 11, input conveyor 12, and output conveyor 13 each comprise a respective container bearing surface 11a, 12a, 13a on which containers may be supported. The container bearing surface 11a of the platen 11 is a face of the platen, whereas the container bearing surfaces 12a, 13b of the input conveyor 12 and output conveyor 13 are defined by the moving outer surface of their respective conveyor belts.

The platen 11 and input conveyor 12 are moveable, each being configured to be raised and lowered as a whole. Thus the platen 11 and input conveyor 12 can each be moved in at least a vertical direction (the y-axis as shown in Figure 1a). Consequently, the upward facing container bearing surfaces 11a, 12a of the platen 11 and the input conveyor 12 are also configured to be raised and lowered in a vertical direction, being moved vertically between a respective raised position and a respective lower position.

In this example discussed below the output conveyor 13 and its upwardly facing container bearing surface 13a remain in position and are vertically static during the method shown in Figure 1b to 1j. Specifically, the container bearing surface 13a of the output conveyor 13 is substantially coplanar with the container bearing surfaces 11a, 12a of the platen 11 and input conveyro12 when they are in their respective lowered positions. However, these features are not essential. For instance, in alternative examples the output conveyor 13 may be moveable, being configured to be raised and lowered in a vertical direction (e.g. with the platen and/or input conveyor).

The transfer mechanism 14 is configured to reciprocate, being capable of moving repeatedly along a substantially horizontal direction parallel to the x-axis shown in Figure 1a and returning along the reverse direction. Thus the position of the transfer mechanism 14 over the input conveyor, platen and output conveyor may be varied. The transfer mechanism 14 is further configured to releasably support or hold containers and may be operated to transfer containers from the input conveyor to the platen and from the platen to the output conveyor. Thus the transfer mechanism 14 may convey containers along a transfer direction extending from the input conveyor towards the output conveyor, as shown this transfer direction is parallel to the x axis.

The method shown in Figures 1b to 1j will now be discussed. In an initial step of the method a first batch B₁ of containers C are received by the input conveyor 12. Specifically, as shown in Figure 1b three containers C are received by the input conveyor 12. The containers C comprise an internal volume accessed by an upwardly facing opening. In preferred examples a product (e.g. a food product) is provided and retained within the containers C.

Figure 1c shows the arrangement of the system 10 after the input conveyor 12 and platen 11 are lowered, as illustrated by arrows L₁ and L_{P} respectively, whilst the containers C on the input conveyor 12 are supported by the transfer mechanism 14. As the input conveyor 12 and platen are lowered a vertical spacing or gap D is formed between the containers C and the container bearing surfaces 12a, 11a of the input conveyor 12 and the platen 11. As shown, containers C of the first batch B₁ are suspended, being supported over the input conveyor 12 by the transfer mechanism 14. As shown the vertical spacing D between the containers C and the input conveyor 12 and between the containers C and the platen 11 is the same, but this is not essential. The input conveyor 12 and platen 11 may be lowered simultaneously but again this is not essential.

Subsequently the transfer mechanism 14 is operated to move the containers C downstream (i.e. in the x-direction shown in Figure 1a) from over the input conveyor 12 to over the platen 11, as shown in Figure 1d. This movement of the transfer mechanism 14 and the containers C that the mechanism supports is substantially horizontal, as shown by arrow M₁. The transfer of the containers C occurs without the containers C and their contents being exposed to excessive forces as they pass the gap G between the input conveyor 12 and the platen 11. This is because throughout the movement there is no contact between the containers C and the input conveyor 12 and the platen 11. Thus the risk of spillages or damage to delicate contents of the containers C is reduced. As shown in Figure 1d following the transfer, the containers C are supported over and directly above the platen 11.

In Figure 1e the platen 11 and input conveyor 12 (and their container bearing surfaces 11a and 12a) are raised, being returned to the raised position previously shown in Figures 1a and 1b, as illustrated by arrows Rₚ and Rₗ respectively. As the platen 11 is raised its upwardly facing container bearing surface 11a contacts the base of the container C, thereby supporting and bearing the weight of the containers C. The containers C are then released by the transfer mechanism 14 and remain in place on the platen 11.

Thus the containers C have been transferred from the input conveyor 12 to the platen 11 without experiencing significant forces in either the vertical or horizontal directions. Each container C is carried over the interface between the input conveyor 12 and platen, and does not experience any drops or collisions with other containers C or any component of the container handling system 10.

Figure 1f shows an optional continuation of the method in which the containers C are sealed using the traysealer formed by the platen 11 (a lower tool part) and the upper tool part 15. A film (not shown) is placed between the containers C and the upper tool part 15. The platen 11 and upper tool part 15 are brought together by raising the platen 11 such that the containers C on the platen 11 and the intervening film are engaged by the upper tool part 15 (i.e. the upper tool part 14 indirectly contact the containers C through the film). This movement of the platen 11 above the raised position initially shown in Figure 1a is shown by arrow R_{P}' in Figure 1f. The face of the upper tool part 15 engaging the containers C and film is heated, activating the heat sealable film and joining the film to the containers C. In this manner the film may be sealed around an opening in the containers C such that the film extends across and closes the opening. In further examples the platen 11 may be stationary during the sealing process and the upper tool part 15 may be lowered so as to engage the containers C.

Before, simultaneously or after the sealing process, the transfer mechanism 14 may be returned to the starting position shown in Figures 1a and 1b. This movement is illustrated by arrow M₂ of Figure 1f. As such, the transfer mechanism 14 completes its reciprocal cycle of movement and is positioned to repeat the process discussed above as further containers are received on the input conveyor 12.

In further example the containers may be processed in alternative manners after being received on the platen 11. For instance, the containers may be filled, inspected, labelled, weighed, printed, boxed, etc. after they have been transferred to the platen by the transfer mechanism 14.

A further optional continuation of the method shown in Figures 1a to 1f will now be discussed in reference to Figures 1g to 1j. These figures illustrate how the method may be extended to handle a continuous flow of containers C, C' through the system 10, transferring containers C, C' in batches from the input conveyor 12 to the platen 11 and subsequently from the platen 11 to the output conveyor 13.

Specifically, as will be seen in Figures 1g to 1j, the first batch B₁ of containers C which have been previously described are transferred from the platen 11 to the output conveyor 13 whilst simultaneously a second batch B₂ of containers C' is transferred from the input conveyor 12 to the platen 11. As will be seen, the first batch B₁ of containers is downstream of the second batch B₂ along the direction of travel of the containers C, C' (i.e. the x-direction per Figure 1a). The containers C, C' of each batch B₁, B₂ are preferably substantially the same in size, shape and contents.

In Figure 1g the platen 11 supporting the first batch B₁ of containers C has been lowered following the sealing of the containers C, the platen 11 being returned to the original position shown in Figure 1a. As such, the container bearing surface 11a of the platen 11 is again coplanar with the container bearing surface 12a of the input conveyor 12. This substantially vertical movement is shown by arrow L_{P}' in Figure 1g. In addition a second batch B₂ of containers C' is received on the input conveyor 12.

Subsequently, the input conveyor 12 and platen 11 are lowered whilst the containers C, C' are supported by the transfer mechanism 14, as shown in Figure 1h. This lowering step is substantially the same as the lowering step discussed with reference to Figure 1c. The input conveyor 12 and platen 11 (and their respective container bearing surfaces 12a, 11a) are dropped or move down in a vertical direction such that a vertical gap D is formed between the containers C, C' supported by the transfer mechanism 14 and each of the input conveyor 12 and platen 11. As such the first batch B₁ of containers C is supported over the platen 11 by the transfer mechanism 14, whilst the second batch B₂ of containers C' are supported over the input conveyor 12 by the transfer mechanism 14. The transfer mechanism 14 may therefore comprise two support portions - an upstream support portion configured to receive and support a batch of containers from the input conveyor (second batch B₂ of containers C') and a downstream support portion configured to receive and support a batch of containers from the platen (first batch B₁).

Subsequently, the transfer mechanism 14 is then operated to move horizontally, as shown by arrow M₁ in Figure 1i. This movement corresponds to the movement shown in Figure 1d. Thus, simultaneously, the first batch B₁ of containers C is discharged from the platen 11, being transferred from over the platen 11 to the output conveyor 12, and the second batch B₂ of containers C' are moved from over the input conveyor 12 to over the platen 11. It should be noted that the transfer of the second batch B₂ of containers C' between the input conveyor 12 and platen 11 again avoids excessive forces being applied to the open (i.e. unsealed) containers C' in the second batch B₂. Whereas, although the output conveyor 13 remains static throughout the method, the contents of the containers C in the first batch B₁ are very unlikely to be spilled since they have just been sealed (as previously discussed).

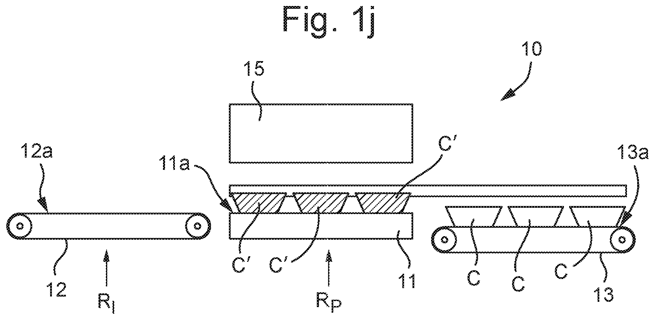

The input conveyor 12 and platen 11 are subsequently raised, returning the platen 11 and input conveyor 12 to their original positions. During this process the container bearing surface 11a of the platen 11 contacts and supports the weight of the containers C' in the upstream second batch B₂. This movement is shown by arrows R_{I} and R_{P} in Figure 1j and is substantially the same as the operation of the platen 11 and input conveyor 12 discussed with reference to Figure 1e.

Subsequently, the containers C, C' may be released by the transfer mechanism. Thereafter, the containers C of the downstream first batch B₁ may be transferred away from the platen by the output conveyor (e.g. for labelling, printing, boxing, packaging, sale and/or distribution). Whereas, the containers C' of the upstream second batch B₂ may be sealed in the same manner as discussed for the first batch B₁ in reference to Figure 1f and subsequently discharged using the same steps as performed on the first batch B₁ in Figures 1g to 1j. Indeed, the process may be repeated continuously as further batches of containers arrive at and are received by the input conveyor 11. This approach, in which containers are simultaneously discharged from and received onto the platen 11, is a particularly quick and efficient approach for handling containers.

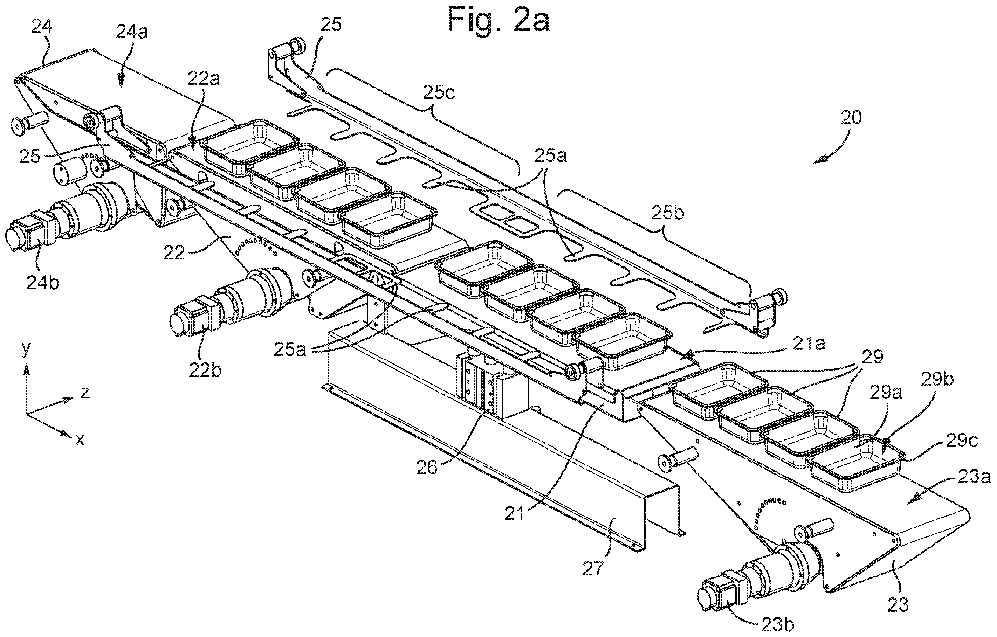

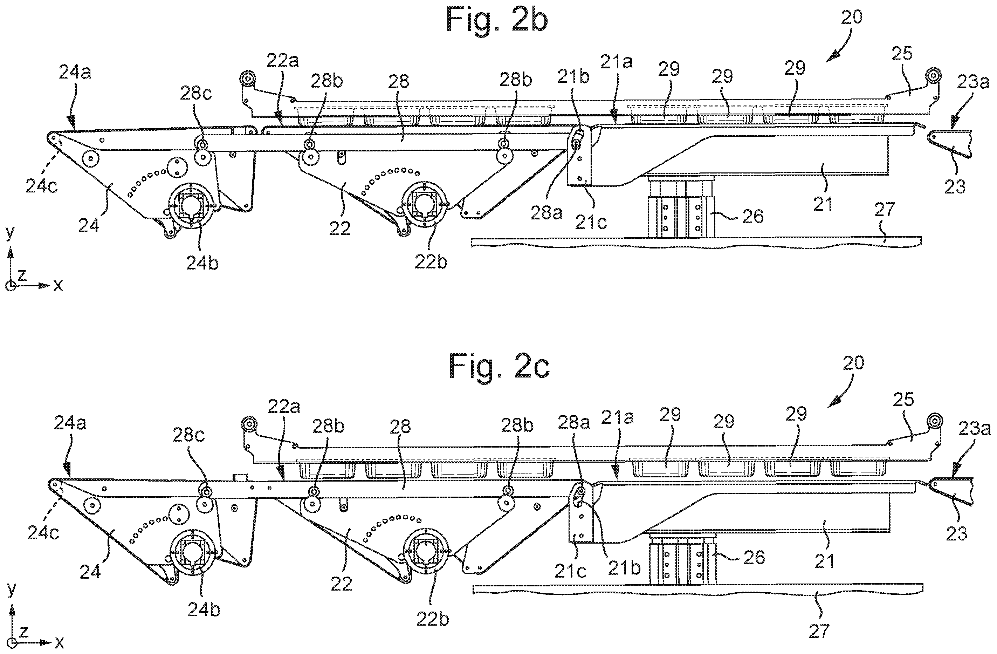

Further features of a specific container handling system 20 will now be discussed with reference to Figures 2a, 2b and 2c. This container handling system is capable of implementing a method substantially similar to the method discussed above with reference to Figure 1 and may be combined with any of the features of this system discussed above.

Figure 2a shows in perspective view a container handling system 20 comprising a platen 21, an input conveyor 22, an output conveyor 23, a delivery conveyor 24, and a transfer mechanism of which two transfer arms 25 are shown. Figures 2b and 2c provide side views of the system 20 omitting the output conveyor 23 for clarity. The platen 21, input conveyor 22, and delivery conveyor 24 each comprise a container bearing surface 21a, 22a, 24a, each of which is configured to be raised and lowered. The transfer mechanism is configured to transfer containers onto and off of the platen 21 from the adjacent input and output conveyors 22, 23 as the container bearing surfaces 21a, 22a, 24a of the platen 21, input convey 22 and delivery conveyor 24 are in their respective lowered positions.

In more detail, each of the platen 21, input conveyor 22, output conveyor 23 and delivery conveyor 24 comprises a respective upwardly facing container bearing surface 21a, 22a, 23a, 24a on which containers can be placed. In order along the x-direction - a direction along which containers may be transferred in use from an upstream point to a downstream point - are provided the delivery conveyor 24, then the input conveyor 22, the platen 11 and finally the output conveyor 23.

The input conveyor 22, output conveyor 23 and delivery conveyor 24 are belt conveyors. Each conveyor 22, 23, 24 comprises a conveyor belt, the outer surface of which forms the respective container bearing surface 24a, 22a, 23a. The conveyor belts are endless and extend around internal rollers (not shown) with their respective conveyor 22, 23, 24. The conveyor belts of each conveyor 22, 23, 24 are driven by a respective drive mechanism 24b, 22b, 23b and as such rotate about internal rollers. Consequently the conveyors 22, 23, 24 are configured to transfer containers along the x-direction which extends from the delivery conveyor 24 to the output conveyor 23. The drive mechanisms 24b, 22b, 23b each comprise an electric motor and suitable gearing.

Three sequential batches of containers 29 are shown in Figure 2a. The three batches which each comprise four containers 29 are supported on the container bearing surfaces 23a, 21a, 22a of the output conveyor 23, platen 21 and input conveyor 22 respectively. All of the containers 29 are substantially identical. Each container 29 will be seen to be a tray comprising an internal volume 29a in which products (e.g. food products) may be provided, the internal volume 29a being accessed by an upwards facing opening 29b in a top face of each container 29. The top face of each container 29 is provided with a rim 29c extending around the perimeter of the opening 29b of said container 29 by which each container 29 may be gripped. No product is shown within the containers 29 for clarity. However, in many examples a product will be dispensed into the containers 29 upstream of the container handling system 20 shown in Figure 2a to 2c or as the containers 29 travel through the container handling system 20.

As is most clearly seen in Figure 2a the transfer arms 25 of the transfer mechanism are positioned on opposing sides of the conveyors 22, 23, 24 and platen 21. The transfer arms 25 are configured to move along the x-direction reciprocally (i.e. in a direction from the input conveyor 22 to the platen 21) so as to transfer containers 29 from the input conveyor 22 to the platen 21, and from the platen 21 to the output conveyor 23 before returning to their starting position. Specifically, in the arrangement of Figure 2a the transfer arms 25 are provided in an upstream position in which they are arranged beside the input conveyor 22 and the platen 21. This position is analogous to the position of the transfer mechanism 15 shown in (for instance) Figures 1a and 1b. This can be contrasted to a downstream position in which the transfer arms 25 as opposed to a downstream position in which the transfer which is analogous to the position of the transfer mechanism 15 shown in (for instance) Figure 1d.

Additionally, in Figure 2a the transfer arms 25 are shown in a released arrangement, the transfer arms 25 being laterally spaced from the containers 29 supported on the platen 21 and conveyors 22, 23, 24. As such, in the arrangement shown in Figure 2a the containers 29 are not held or gripped by the transfer mechanism. The transfer mechanism is further configured to move the opposed transfer arms 25 reciprocally towards and away from one another in the z-direction (perpendicular to the direction in which containers are transferred during operation of the system) as shown by arrows G. Moving the transfer arms 25 towards one another in this manner allows the transfer mechanism to close around the containers 29 initially supported on the platen 21, input conveyor 22, and output conveyors 23. In this closed arrangement the transfer arms 25 are positioned adjacent to the containers 29 and will substantially surround the containers 29.

In the closed arrangement the containers 29 are constrained, being restricted from moving in the lateral directions (the x and z directions) relative to the gripping arms 25a. Subsequently lowering the container bearing surfaces 21a, 22a of the platen 21 and input conveyor 22, will cause the containers 29 to settle onto the surrounding transfer arms 25 such that the containers 29 are supported over the underlying container bearing surfaces. In effect, by lowering the container bearing surfaces 21a, 22a of the platen 21 and input conveyor 22 the weight of the containers 29 is transferred to the transfer arms 25 and a vertical gap is formed between the containers 29 and the platen 21 and input conveyor 22. The containers 29 which are held by the transfer rams 29may equally be released from the transfer mechanism by moving the transfer arms 25 away from one another back to the open or released arrangement shown in Figure 2a.

In more detail, each transfer arm 25 comprises a plurality of support projections 25a which extend from said transfer arm 25 towards a corresponding support projections 25a on the opposing transfer arm 25. The distance between adjacent support projections 25a on each transfer arm 25 is configured to accommodate a container 29 - i.e. such that the distance between support projections 25a along the x-direction is at least as great as the width and/or length of the containers 29 the system is configured to handle. By moving the opposing transfer arms 25 towards one another as discussed the support portions 25a and the transfer arms 25 close around the containers 29 positioned on the container bearing surfaces 21a, 22a, 23a of the platen 21, input conveyor 22 and output conveyor 23. Thus, as previously mentioned, in this closed arrangement the movement of the containers 29 relative to the transfer arms 25 in the lateral directions is restricted, allowing the transfer mechanism to move the transfer arms 25 and containers 29 simultaneously (i.e. in tandem).

The transfer arms 25 of the transfer mechanism are configured to transfer multiple batches of containers 29 simultaneously. The support projecitons 25a on each transfer arm 25 are arranged in two opposed groups each configured to receive and support a corresponding batch of containers 29. The first group of support projections 25a is provided at a downstream, first support portion 25b of each transfer arm 25. The first group of support projections 25a is configured to receive and support containers 29 from the platen 21 and to transfer the said containers 29 from over the platen 21 to the output conveyor 22. Whilst the second group of support projections 25a are provided at an upstream, second support portion 25c of each transfer arm 25. The second group of support projections 25a is configured to receive and support containers 29 from the input conveyor 21, and to transfer containers 29 from over the input conveyor 22 to over the platen 21. Thus the two support portions 25b, 25c of the transfer arms 25 are configured to receive, support and transfer sequential batches of containers 29. In other words, the support projections 25a of the first support portion 25b are configured to receive, support and transfer a downstream batch of containers 29 whilst simultaneously the support projections 25a of the upstream second support portion 25c receive, support and transfer a sequential and subsequent upstream batch of containers 29. The movement of the transfer arms 25 in both the x- and z-directions may be performed using any suitable means including drive mechanisms comprising a motor and/or a pneumatic or hydraulic system.

As previously discussed, containers 29 are preferably moved between the input conveyor 22 and the platen 21 of the system 20 and from the platen 21 to the output conveyor 23 whilst the container bearing surfaces 22a, 24a, 21a of the input conveyor 22, delivery conveyor 24 and platen 21 are in their respective lowered positions. The means by which the container bearing surfaces 22a, 24a, 21a of the input conveyor 22, delivery conveyor 24 and platen 21 are moved will now be discussed with reference to the arrangements of the system 20 shown in Figures 2b and 2c.

Figure 2b shows the system when the container bearing surfaces 22a, 24a, 21a of the input conveyor 22, delivery conveyor 24 and platen 21 are in raised positions. The containers 29 are positioned on and supported by the container bearing surface 22a, 21a of each of the input conveyor 22 and platen 21. In contrast, Figure 2c shows the container bearing surfaces 22a, 24a, 21a in their lowered positions. The containers 29 are held by the transfer arms 25 of the transfer mechanism, and are supported (i.e. suspended) over the input conveyor 22 and platen 21 such that a vertical gap exists between the containers 29 and the underlying input conveyor 22 and platen 21. In this lowered arrangement shown in Figure 2c the containers 29 may be moved laterally from the input conveyor 22 to the platen 21 by the transfer mechanism without contacting with the input conveyor 22 or platen 21.

The delivery conveyor 24, input conveyor 22 and platen 21 are mechanically linked by a linkage member 28. As such, the container supporting surfaces 24a, 22a, 21a of each unit can be moved together using a single raising and lowering mechanism 26 positioned below the platen 21 on a stationary beam 27. Specifically, the raising and lowering mechanism 26 and linkage member 28 raise and lower the container bearing surfaces 22a, 21a of the input conveyor 22 and platen 21, and rotate the container bearing surface 24a of the delivery conveyor 24. Additionally, the linkage between the platen 21 and the delivery and input conveyors 22, 24 is configured that the container bearing surface 21a of the platen 21 may be raised and lowered through a greater vertical distance than the container bearing surfaces 22a, 24a of the delivery and input conveyors 22, 24.

The raising and lowering mechanism 26 comprises a hydraulic or pneumatic ram attached to an underside 21b of the platen 21 which opposes the container bearing surface 21a of the platen 21. Thus raising and lowering the ram directly raises and lowered the platen 21 as a whole (i.e. the platen moves as a single unit). As will be seen the ram is extended in the raised arrangement of Figure 2b, but retracted in the lowered arrangement of Figure 2c.

In contrast to the platen 21, the delivery conveyor 24 and input conveyor 21 are not moved as a single unit. The drive mechanisms 24b, 22b and drive rollers (not shown) of the delivery conveyor 24 and input conveyor 22 are fixed in position, remaining stationary as movable freely rotating rollers of these conveyors 22, 24 (i.e. the non-driven rollers) are moved by the linkage member 28 and raising and lowering mechanism 26.

The raising and lowering motion from the raising and lowering mechanism 26 is transferred from the platen 21 to the linkage member 28 by a platen connection 28a. However, this platen connection 28a is free to move within a connection slot 21b in an end plate 21c of the platen 21. Thus the platen 21 may be raised and lowered through a vertical range equivalent to the height of the connection slot 21b without applying force to the platen connection 28a of the linkage member 28. Whereas, if the platen 21 is raised or lowered by a greater distance such that the platen connection 28a is contacted by the ends of the connection slot 21b forces from the raising and lowering mechanism 26 will be transferred to the linkage member 28. Thus the linkage member 28 (and the container bearing surfaces 22a, 24a of the connected input conveyor 22 and delivery conveyor 24) are driven upwards and downwards as the platen 21 is raised and lowered. Thus, due to the provision of the connection slot 21b, the platen may be raised and lowered by a greater vertical distance than either the container bearing surface 22a of the input conveyor and the downstream end of the container bearing surface 24a of the delivery conveyor 24. In further examples, the size of the connection slot 21b may by adjusted to change the difference in motion ranges between the different units of the system, or alternatively the connection slot 21b may be omitted entirely (e.g. such that the platen and input conveyor are raised and lowered together by a similar amount).

The movement of the linkage member 28 is transferred to the input conveyor 21 by input conveyor connections 28b. These cause moveable freely rotating (i.e. non-driven) rollers of the input conveyor 21 to be raised and lowered with the linkage member 28, thereby raising and lowering the conveyor belt that extends around these rollers and consequently raising and lowering the container bearing surface 22b defined by the belt.

Similarly the movement of the linkage member 28 is transferred to a downstream end of the delivery conveyor 24 by delivery conveyor connection 28c. This delivery conveyor connection 28c causes moveable freely rotating (i.e. non-driven) rollers at the downstream end of the delivery conveyor 24 to be raised and lowered with the linkage member 28. However, the vertical position of the upstream end of the delivery conveyor 24 (i.e. the end furthest from the platen 21) is fixed at a static pivot 24c. Thus the moveable freely-rotating rollers of the delivery conveyor 24 and the belt and container bearing surface 24a of the delivery conveyor rotate about this static pivot 24c as the linkage member 28 is raised and lowered. Hence the downstream end of the container bearing surface 24a of the delivery conveyor 24 is maintained at a similar vertical position to the container bearing surface 22a of the input conveyor 22a as the input conveyor is raised and lowered. Whereas the vertical position of the upstream end of the container bearing surface 24a of the delivery conveyor 24 will remain static as the surface 24a rotates.

The static pivot 24c is positioned such that the upstream end of the container bearing surface 24a remains stationary at a position which is approximately the centre-point of the vertical movement of the container bearing surface 22a of the input conveyor 22 and the downstream end of the container bearing surface 24a of the delivery conveyor 22. As such, as the downstream end of the container bearing surface 24a of the delivery conveyor 24 is raised and lowered, the container bearing surface 24a is alternately inclined and declined relative to the horizontal x-axis. This can be seen by comparing the arrangement of the delivery conveyor 24 to the x-axis in Figures 2b and 2c. In Figure 2b, when the input conveyor 24 is raised, the container bearing surface 24a of the delivery conveyor 24 is inclined relative to the horizontal. Whereas in Figure 2c, where the input conveyor 24 is lowered, the container bearing surface 24a of the delivery conveyor 24 is declined relative to the horizontal.

Specifically, the container bearing surface 22a of the input conveyor 22 and the upstream end of the container bearing surface 24a of the delivery conveyor 24 are raised and lowered by 20mm between their respective raised and lowered positions. Whereas, the container bearing surface 24a of the delivery conveyor 24 is rotated between approximately +1.28 degrees and -1.28 degrees relative to the horizontal.

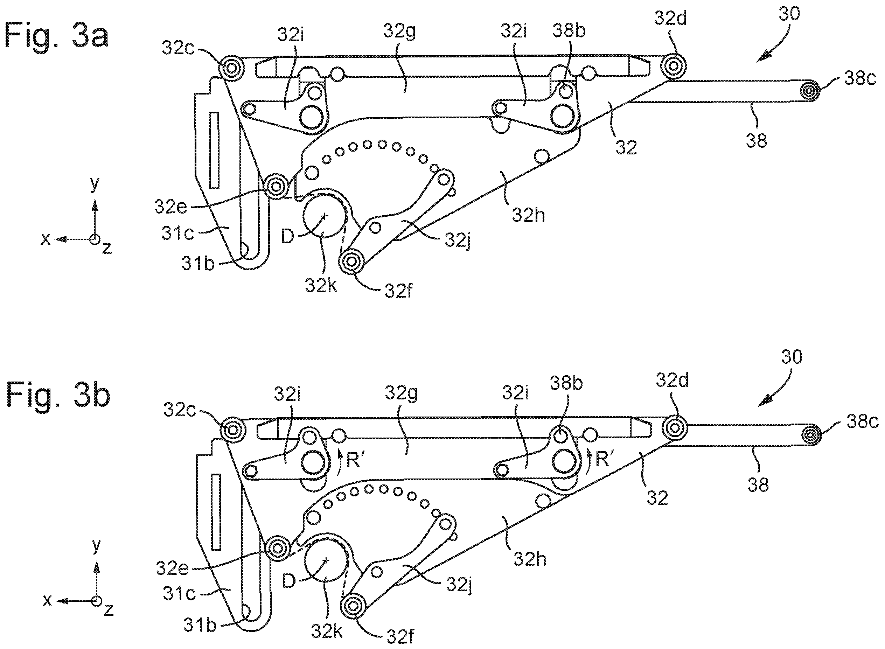

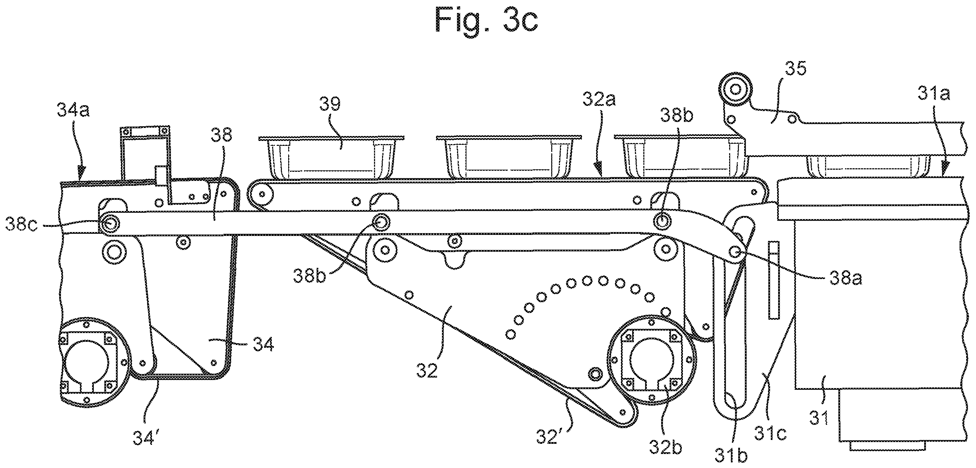

Potential connections between a linkage member and an input conveyor will now be discussed in more detail with reference to Figures 3a, 3b and 3c. Figures 3a and 3b show a cross section through a system 30 looking in the opposing direction to the examples of Figures 2b and 2c (as shown by the opposing axes of these drawings), whereas Figure 3c shows a side view of a system from a corresponding position as in Figures 2b and 2c. In practice this system 30 may comprise any of the additional features of the systems 10, 20 shown in Figures 1 and 2 and may be used to articulate and control any of the conveyors previously discussed.

For clarity Figure 3c shows the platen 31, input conveyor 32, delivery conveyor 34, linkage member 38 and end plate 31c as well as containers 39 and transfer arms 35 whereas only the input conveyor 32, the linkage member 38 and an end plate 31c of a platen are shown in Figures 3a and 3b. Furthermore, the belts 32', 34' of the input conveyor 32 and delivery conveyor 34 are shown in Figure 3c but omitted for clarity in Figures 3a and 3b. The components of Figures 3a to 3c are similar to the equivalent components with corresponding reference signs shown in Figures 2a to 2c and share many corresponding features and advantages.

The input conveyor 32 is a belt conveyor comprising a continuous conveyor belt 32' that defines the upwardly facing container bearing surface 32a of the input conveyor 32, as shown in Figure 3c. This belt 32' is driven by drive mechanism 32b (e.g. a motor), being configured to extend and move round a series of rollers within the input conveyor. These rollers are shown in the cross sections of Figures 3a and 3b.

Specifically, the input conveyor 32 comprises four undriven or freely-rotating rollers 32c, 32d, 32e, 32f. Three of these freely-rotating rollers 32c, 32d, 32e are moveable and may be raised and lowered using the linkage member 38. In addition, the input conveyor 32 comprises a static drive mechanism 32b and static drive roller 32k which are both centred at point D. In use a continuous conveyer belt 32' will extend around and enclose the freely-rotating rollers 32c, 32d, 32e, 32f. An outer surface of the conveyor belt will define a container bearing surface of the input conveyor 32. The outer surface of the conveyor belt will extend around and be engaged by the drive roller 32k, as shown by the dashed line on each figure. Thus the system 30 is configured to move the conveyor belt of the input conveyor 32 (e.g. to transfer containers thereon) by rotating the drive roller 32k using the drive mechanism.

The moveable freely-rotating rollers 32c, 32d, 32e are mounted on a movable side plate 32g of the input conveyor 32. Whereas, the static drive roller 32k, static drive mechanism and static freely-rotating roller 32f are mounted on a static side plate 32h of the input conveyor 32. Specifically the moveable freely-rotating rollers 32c, 32d, 32e and moveable side plate 32g may be raised and lowered relative to the static drive roller 32k, static drive mechanism, static side plate 32h and static freely-rotating roller 32f so as to raise and lower the conveyor belt and the container bearing surface of the input conveyor 32. Thus the container bearing surface may be raised and lowered relative to an overlying transfer mechanism configured to receive and support containers from the input conveyor 32 and support containers over the input conveyor 32.

The linkage member 38 is coupled to the moveable side plate 32g of the input conveyor 32 by two input conveyor connections 38b (bolts) which are each coupled to an 'L'-shaped rotating bracket 32i. Raising and lowering the linkage member 38 (e.g. by raising and lowering a mechanically linked platen as previously discussed) may cause the rotating brackets 32i to rotate, thereby raising lowering the moveable components of the input conveyor 32 - i.e. the movable freely rotating rollers 32c, 32d, 32e and moveable side plate 32g.

Figure 3a shows the moveable components of the input conveyor 32 and the linkage member 38 in their raised positions. Whilst Figure 3b shows these components in their lowered positions. As will be seen, in Figure 3a the movable freely rotating rollers 32c, 32d, 32e, moveable side plate 32g and linkage member 38 are lower relative to the static positions of the drive mechanism and drive roller 32k (point D) and the static side plate 32h of the input conveyor 32 in Figure 3b than Figure 3a. The rotation of the rotating brackets 32i between these positions is shown by arrows R'.

In use the linkage member 38 is also coupled to the platen by a platen connection 38a (shown in Figure 3c), which is free to move in connection slot 31b in the platen end plate 31c, and coupled to a delivery conveyor by delivery connection 38c. As will be seen, the connection slot 31b in Figures 3a and 3b is much longer than the connection slot 21b shown in Figures 2a to 2c. This longer slot 31b maintains a mechanical linkage between the platen 31 and the input conveyor 32 whilst allowing the platen and its container bearing surface to be raised further above the container bearing surface of the input conveyor 32. This may allow the platen to be raised over the input conveyor 32 such that containers on the platen to engage an upper tool part of a traysealer during a sealing process analogous to the method discussed in relation to Figures 1a to 1j.

Indeed it will be appreciated from the description above that the raising and lowering mechanism 26 is a single mechanism configured to both: lower the container bearing surfaces 21a, 22a of the platen 21 and input conveyor 22 so as to generate separation or spacing between the container bearing surfaces and containers supported by the transfer arms 25 (as shown in Figure 2c); and raise the container bearing surface 21a of the platen 21 such that containers positioned on the container bearing surface 21a of the platen 21 may be processed. For instance, the raising and lowering mechanism my be configured to raise the container bearing surface 21a of the platen 21 such that containers positioned on the container bearing surface 21a are engaged by the heated surface of an upper tool part of a traysealer (not shown) and may be sealed. A single raising and lowering mechanism 26 which performs both the lowering of the container bearing surface 21a for the transfer of containers and the raising of the platen for sealing (or alternative processing steps) is particularly space and resource efficient and avoids the needs for separate components to perform the separate steps of lowering and raising the container bearing surface 21a. The optional connection slot 31b enables the platen 21 to be raised relative to the input conveyor 22 during a sealing step or other processing step to minimise resource requirements and avoid interrupting the conveying of containers by the input conveyor 22 which may enable the input conveyor to accumulate a subsequent batch of containers (for instance).

The input conveyor 32 further comprises a tensioning bar 32j which may be selectively positioned to tension the conveyor belt 32 of the input conveyor 32 via the static freely-rotating roller 32f (although another roller could equally be used).

The tension in the conveyor belt 32 is maintained at a substantially constant level when the moveable freely-rotating rollers 32c, 32d, 32e (and hence the container bearing surface) are in each of their raised and lowered positions. This is because the arrangement of the freely-rotating rollers 32c, 32d, 32e, 32f and the drive roller 32k are selected to ensure a substantially perimeter around which the conveyor belt will extent in each position. Additionally, the arrangement of the freely-rotating rollers 32c, 32d, 32e, 32f and the drive roller 32k is selected such that the contact distance between the conveyor belt and the drive roller 32k is similar in both the raised and lowered positions of the moveable freely-rotating rollers 32c, 32d, 32e (and thus the raised and lowered positions of the container bearing surface) as may be seen by comparing the dashed lines of Figures 3a and 3b.

The systems 20, 30 shown in Figures 2 and 3 are single-lane systems. As such, containers travel through the system one by one along a single-file line. The conveyors and platens are substantially the same width as the containers. However, this is not essential and in further examples there may be provided twin or multi-lane systems which operate in substantially the same way as the examples discussed above. In these examples two or more parallel lines of containers may be transferred through the system together. In such examples there may be provided one or more central fences positioned between adjacent lines of containers and which, together with the transfer arms, are configured to support the containers over the input conveyor and platen as the input conveyor and platen are lowered and to transfer the containers between the input conveyor and platen.

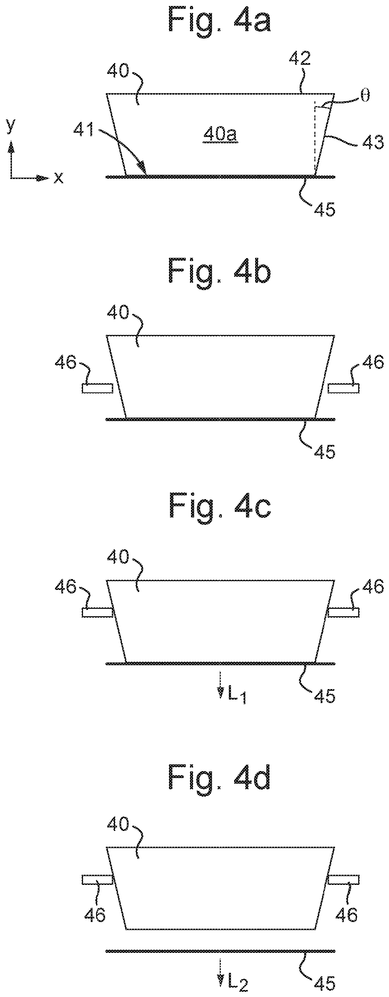

Particularly, preferred arrangements of containers and transfer mechanisms and methods of handling and supporting containers using a transfer mechanism will now be discussed with reference to Figures 4a to 4d, 5a to 5d and 6a to 6d. These methods and the containers may be combined with any of the systems or methods above with reference to Figures 1, 2 and 3.

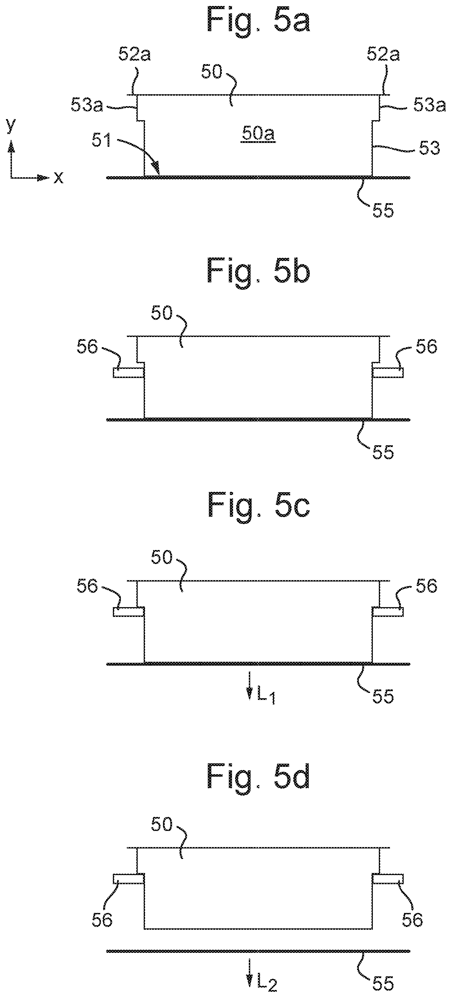

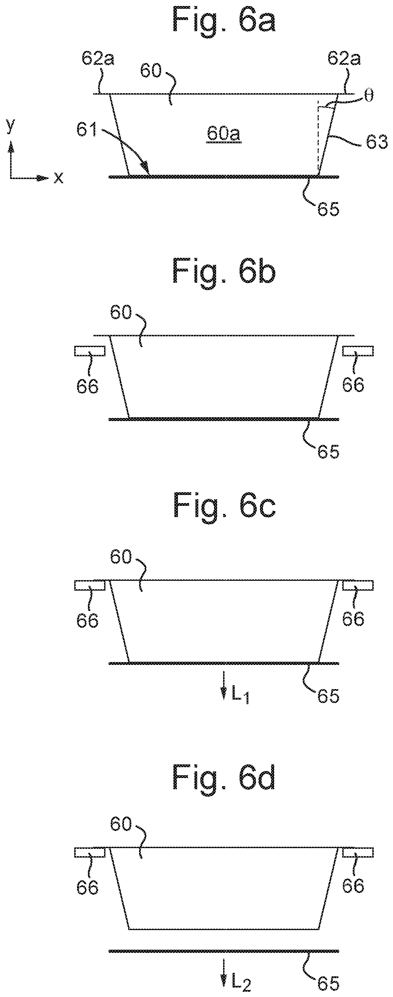

Each set of figures shows a container 40, 50, 60 in schematic cross section on a movable container bearing surface 45, 55, 65 (e.g. the container bearing surface of any of the platens or conveyors discussed above). The containers 40, 50, 60 each enclose an internal volume 40a, 50a, 60a - e.g. for receiving product(s). The width of each container 40, 50, 60 (i.e. the dimension of the container 40, 50, 60 in the x direction) increases from the base surface 41, 51, 61 (adjacent to the respective container bearing surfaces 45, 55, 65) to the free top surface 42, 52, 62 of the container 40, 50, 60. Specifically, the container 40 of Figures 4a to 4d comprises a draft angle *θ* such that the side walls 43 of the container 43 are angled. Thus the container 40 increases in width continuously from its base surface 41 to top surface 42. The container 50 of Figures 5a to 5d comprises stepped sides with a projection 53a extending outwards from each side wall 53 of the container 50 and a rim 52a extending around the perimeter of the container 50 at its top surface 52, the width of the container 50 width increasing discontinuously along its height. Finally, the container 60 of Figures 6a to 6d comprises a draft angle *θ*, the side walls 63 being angled relative to the base of the container 60 and a rim 65.

Thus each container may be supported and lifted from the underlying container bearing surface 45, 55, 65 by a transfer mechanism as the container bearing surfaces 45, 55, 65 are lowered through the method steps shown in each set of sequential figures. The transfer mechanism comprises transfer arms 46, 56, 66 (e.g. transfer arms comprising support projections as discussed with reference to Figure 2 above). In Figures 4b, 5b, 6b the transfer arms 46, 56, 66 are placed on either side of the containers 40, 50, 60 at a distance apart that is greater than the local width of the containers 40, 50, 60 such that the transfer arms 46, 56, 66 do not contact the containers 40, 50, 60 but less wide than the maximum with of the containers 40, 50, 60. Subsequently the container bearing surfaces 45, 55, 65 may be lowered as shown by arrows L₁ such that the transfer arms 46, 56, 66 contact the containers 40, 50, 60, such that the containers 40, 50, 60 are held and supported by the transfer arms 46, 56, 66 (see Figures 4c, 5c, 6c). The container bearing surfaces 45, 55, 65 are then lowered further as shonwn by arrows L₂ such that the containers 40, 50 60 are supported over (i.e. suspended over) the container bearing surfaces 45, 55, 65 by the transfer mechanism. Hence by lowering the container bearing surfaces 45, 55, 65 the weight of the containers 40, 50, 60 is passed to the transfer arms 46, 56, 66 and a vertical gap is formed between the containers 40, 50, 60 and the underlying surfaces 45, 55, 65 .

As will be seen the process of lowering the container bearing surfaces 45, 55, 65 involves two phases. In the first phase (between Figures 4b, 5b and 6b and Figures 4c, 5c, and 6c) the containers 40, 50, 60 are lowered by the container bearing surface 45, 55, 65 such that the weight of the containers 40, 50, 60 is transferred to the transfer arms 46, 56, 66. In effect, the containers 40, 50 , 60 settle onto the stationary transfer arms 46, 56, 66. In the second phase between Figures 4c, 5c and 6c and Figures 4d, 5d, and 6d) the container bearing surfaces 45, 55, 65 continue to lower such that a gap is formed between the containers 40, 50, 60 and the container bearing surfaces 45, 55, 65. As such, the containers 40, 50, 60 are supported over or above the container bearing surfaces 45, 55, 65. In preferred implementations, during each of the first phase and the second phase the container bearing surfaces 45, 55, 65 are lowered by 10 mm, such that during the entire lowering process the container bearing surfaces 45, 55, 65 are lowered by 20 mm in total.

It will be appreciated that the processes discussed above involve substantially no lateral or horizontal forces being applied to the containers 40, 50, 60 or their contents as the containers are lifted from and supported over the container bearing surfaces 45, 55, 65. Subsequently, the transfer mechanism may then move the containers 40, 50, 60 laterally without the containers 40, 50, 60 contacting the underlying container bearing surface 45, 55, 65. This further minimises the lateral forces applied to the containers 40, 50, 60 and their contents during the container handling processes previously discussed.

Containers with draft angles (e.g. the examples of Figures 4 and 6) are particularly preferred since, in the case of misalignment between the containers and transfer arms, the alignment will tend to be corrected as the container bearing surface is lowered and the container settles into (i.e. is engaged by) the transfer arms of the transfer mechanism.

The process shown in each set of figures may be reversed to release the respective container 40, 50, 60 from the transfer arms 46, 56, 66. Specifically, a container bearing surface (such as the container bearing surfaces 45, 55, 65 shown in the figures) may be raised to contact the containers 40, 50, 60 and to lift the containers 40, 50, 60 away from the transfer arms 46, 56, 66. This may be performed after the containers 40, 50, 60 have been transferred as discussed above. Again this approach avoids any substantial lateral motion or forces. The transfer arms 46, 56, 66 may then be removed from either side of the containers 40, 50, 60 - e.g. such that the containers may be processed or transferred away.

In each of Figures 4d, 5d and 6d it will be seen that each container 40, 50, 60 is supported by the transfer arms 46, 56, 66 at a position closer to their respective top surface 42, 52, 62 than their respective base surface 41, 51, 61 (i.e. at a position greater than halfway from the base surface 41, 51, 61 to the top surface 42, 52, 62). Indeed, the containers 40, 50, 60 will in these arrangement be held above their centre of mass and (in many cases) above the centre of mass of the container 40, 50, 60 and their respective contents. This increases the stability of the containers 40, 50, 60 as they are lifted and gripped, and subsequently transferred laterally, by the transfer mechanism. Similar arrangements in which containers are supported by a transfer mechanism closer to their top or upper surface than their base and above their centre of mass are shown in Figures 1c, 1d, 1h, 1i and 2c. Such arrangements increase the stability of the containers and their contents and reduce the risk of spillages from the containers as the containers are transferred.

In the examples shown in Figures 4b, 5b and 6b the transfer arms 46, 56, 66 are initially closed around the containers 40, 50, 60 such that the transfer arms 46, 56, 66 are adjacent to the containers 40, 50, 60. In this arrangement the transfer arms 46, 56, 66 restrict movement of the containers 40, 50, 60 in a lateral direction (e.g. in the x-axis as shown) but allow the containers 40, 50, 60 to move vertically relative to the transfer arms 46, 56, 66 such that the containers 40, 50, 60 may gently settle onto the transfer arms 46, 56, 66 as the container bearing surfaces are lowered 45, 55, 65. A similar approach has been described within reference to the systems shown in Figures 2 and 3. This avoids significant lateral forces being applied from the transfer arms to the containers. However, this is not essential. Indeed, in further examples of the invention the transfer arms may be closed together in a lateral direction such that the transfer arms contact and grip containers there between. For instance, the distance between the transfer arms is equal to or less than the width of the containers to be transferred. By gripping the containers in this manner the containers are restricted from movement in all directions relative to the transfer arms. Subsequently, the underlying container bearing surface (e.g. the container bearing surface of an input conveyor or platen) may be lowered such that the gripped containers are supported over the container bearing surfaces and the containers can be conveyed laterally without touching. It will be appreciated that during this lowering process the weight of the containers will be transferred to the transfer mechanism quickly as the gripped containers cannot move relative to the transfer arms.

In all of the methods discussed above, the forces (and especially lateral forces) applied to containers are minimised as the containers are handled. This reduces the incidence of damage to containers and their contents. Furthermore, spillages or other escapes of product from containers may be reduced. Therefore, product quality is improved, maintenance and clearing requirements are reduced and the throughput of containers may be increased. The benefits are particularly applicable to the food industry and particularly handling and packaging food products comprising liquids.

## Claims

1. A method for handling one or more containers (C) performed by a system (10) comprising a platen (11), an input conveyor (12) and a transfer mechanism (14), wherein the platen (11) and the input conveyor (12) each comprise a moveable container bearing surface, the method comprising:
receiving the one or more containers on the input conveyor (12);
lowering the container bearing surfaces of the input conveyor (12) and the platen (11) such that the containers are supported by the transfer mechanism (14) over the input conveyor (12);
transferring the containers from over the input conveyor (12) to over the platen (11) using the transfer mechanism (14);
raising the container bearing surfaces of the input conveyor (12) and the platen (11) such that the containers are supported by the platen (11); and
releasing the containers from the transfer mechanism (14).

2. A method according to any preceding claim, wherein the transfer mechanism (14) comprises transfer arms configured to support and transfer the containers, and wherein the method comprises closing the transfer arms (14) around the containers received on the input conveyor (12) such that the containers can be supported by the transfer arms.

3. A method according to any preceding claim, wherein releasing the containers from the transfer mechanism (14) comprises raising the container bearing surface of the platen (11).

4. A method according to any preceding claim, wherein the one or more containers received by the input conveyor (12) each comprise an unsealed opening.

5. A method according to any preceding claim, wherein the method comprises the subsequent step of sealing the one or more containers on the platen (11);
wherein preferably sealing the one or more containers comprises providing a film across an opening of each container; and wherein preferably the sealed containers are gastight and/or watertight.

6. A method according to any preceding claim, wherein the system comprises a traysealer;
and wherein preferably the platen (11) forms part of a lower tool part of a traysealer and sealing the one or more containers on the platen comprises:
providing a film between the containers on the platen (11) and an upper tool part (15);
bringing the platen (11) and the upper tool part (15) together such that the upper tool part (15) engages the film and the underlying containers; and
heating the upper tool part (15)so as to join the film to the containers;
wherein preferably bringing the platen (11) and the upper tool part (15) together comprises raising the container bearing surface of the platen (11) relative to the input conveyor (12).

7. A method according to any preceding claim, wherein lowering the container bearing surfaces of the input conveyor (12) and the platen (11) comprises lowering the container bearing surface of the input conveyor (12) and/or the container bearing surface of the platen (11) such that the containers are supported by the transfer mechanism with a vertical gap of 5 mm or more between the containers and the respective container bearing surface, preferably with a vertical gap of 8 mm, more preferably with a vertical gap of 10 mm or more.

8. A method according to any preceding claim, wherein the system (10) comprises an input conveyor drive mechanism configured to drive the input conveyor (12), wherein the input conveyor drive mechanism is stationary as the container bearing surface of the input conveyor (12) is raised and lowered.

9. A method according to any preceding claim, wherein the input conveyor (12) is a belt conveyor comprising an input belt, the container bearing surface being an outer surface of the input belt;
wherein preferably the tension of the input belt is substantially constant when the container bearing surface of the input conveyor (12) is raised and lowered;
and wherein preferably the system (10) comprises an input conveyor drive mechanism configured to drive the input belt via a drive roller, and wherein a contact length between the input belt and the drive roller is substantially the same when the container bearing surface of the input conveyor (12) is raised and lowered.

10. A method according to any preceding claim, wherein the platen (11) and input conveyor (12) are mechanically linked such that the container bearing surfaces of the platen (11) and the input conveyor (12) are simultaneously raised and lowered by a single raising and lowering mechanism.

11. A method according to any preceding claim, wherein the system (10) comprises a single raising and lowering mechanism configured to:
lower the container bearing surface of the platen (11) such that the gripped containers are supported by the transfer mechanism (14);
and to raise the container bearing surface of the platen (11) such that containers positioned thereon may be processed;
wherein preferably the single raising and lowering mechanism is configured to raise the container bearing surface of the platen (11) such that containers positioned thereon are engaged by the upper tool part (15) of a traysealer

12. A method according to any preceding claim, wherein the containers received on the input conveyor (12) are received from an upstream delivery conveyor;
wherein preferably the delivery conveyor comprises a moveable container bearing surface having a downstream end adjacent to the input conveyor and an upstream end furthest from the input conveyor (12); and wherein the method preferably comprises:
raising and lowering the downstream end of the container bearing surface of the delivery conveyor as the container bearing surface of the input conveyor (12) is raised and lowered and wherein preferably the upstream end of the container bearing surface of the delivery conveyor remains stationary as the downstream end is raised and lowered.

13. A method according to any preceding claim, the method further comprising the subsequent steps of:
lowering the container bearing surface of the platen (11) such that the containers are supported by the transfer mechanism (12) over the platen (11);
transferring the containers from over the platen (11) to an output conveyor (13) using the transfer mechanism (14); and
releasing the containers from the transfer mechanism (14);
and wherein the method preferably further comprises the subsequent step of:
conveying the containers away from the platen (11) using the output conveyor (13);
and wherein preferably the output conveyor (13) and/or a container bearing surface of the output conveyor (13) remains substantially stationary in the vertical direction throughout the method.

14. A method for handling two sequential batches of containers each batch comprising one or more containers;
wherein the two sequential batches of containers include a downstream batch and a subsequent upstream batch, and wherein each batch of containers is handled according to the method of any previous claim;
and wherein the method further comprises:
simultaneously transferring the downstream batch of containers from the platen (11) to an output conveyor (13) and transferring the upstream batch of containers from over the input conveyor (12) to over the platen (11) using the transfer mechanism (14).

15. A container handling system (10) comprising:
a platen (11) and an input conveyor (12) each of which comprise a moveable container bearing surface configured to move between a respective raised position and a respective lowered position; and
a reciprocating transfer mechanism (14) configured to:
support one or more containers previously received on the input conveyor (12) as the container bearing surface (12a) of the input conveyor (12) is lowered from its raised position to its lowered position, such that the one or more containers are supported by the transfer mechanism (14) over the input conveyor (12); and
transfer the one or more containers from over the input conveyor (12) to over the platen (11) when the input conveyor (12) and platen (11) are in their respective lowered positions.

## Patentansprüche

1. Verfahren zum Handhaben eines oder mehrerer Behälter (C), das von einem System (10) durchgeführt wird, das eine Platte (11), einen Eingabeförderer (12) und einen Transfermechanismus (14) umfasst, wobei die Platte (11) und der Eingabeförderer (12) jeweils eine bewegliche Behälterauflagefläche umfassen, das Verfahren umfassend:
Aufnahme des einen oder der mehreren Behälter auf dem Eingangsförderer (12);
Absenken der Behälterauflageflächen des Eingangsförderers (12) und der Platte (11), so dass die Behälter durch den Übergabemechanismus (14) über den Eingangsförderer (12) getragen werden;
Übergeben der Behälter über den Eingangsförderer (12) an die Platte (11) mit Hilfe des Übergabemechanismus (14);
Anheben der Behälterauflageflächen des Eingangsförderers (12) und der Platte (11), so dass die Behälter von der Platte (11) getragen werden; und
Freigeben der Behälter aus dem Transfermechanismus (14).

2. Verfahren nach einem vorstehenden Anspruch, wobei der Transfermechanismus (14) Transferarme umfasst, die konfiguriert sind, um die Behälter zu stützen und zu transferieren, und wobei das Verfahren das Schließen der Transferarme (14) um die auf dem Eingangsförderer (12) aufgenommenen Behälter umfasst, so dass die Behälter von den Transferarmen gestützt werden können.

3. Verfahren nach einem vorstehenden Anspruch, wobei das Freigeben der Behälter von dem Transfermechanismus (14) das Anheben der Behälterauflagefläche der Platte (11) umfasst.

4. Verfahren nach einem vorstehenden Anspruch, wobei der eine oder die mehreren vom Eingangsförderer (12) aufgenommenen Behälter jeweils eine unverschlossene Öffnung umfassen.

5. Verfahren nach einem vorstehenden Anspruch, wobei das Verfahren den nachfolgenden Schritt des Versiegelns des einen oder der mehreren Behälter auf der Platte (11) umfasst;
wobei das Versiegeln des einen oder der mehreren Behälter vorzugsweise das Anbringen einer Folie über einer Öffnung jedes Behälters umfasst; und wobei die versiegelten Behälter vorzugsweise gasdicht und/oder wasserdicht sind.

6. Verfahren nach einem vorstehenden Anspruch, wobei das System einen Schalensiegler umfasst;
und wobei vorzugsweise die Platte (11) einen Teil eines unteren Werkzeugteils eines Schalensieglers bildet und das Versiegeln des einen oder mehrerer Behälter auf der Platte umfasst:
Bereitstellen einer Folie zwischen den Behältern auf der Platte (11) und einem oberen Werkzeugteil (15);
Zusammenbringen der Platte (11) und des oberen Werkzeugteils (15), so dass das obere Werkzeugteil (15) an der Folie und den darunter liegenden Behältern angreift; und
Erhitzen des oberen Werkzeugteils (15), um die Folie mit den Behältern zu verbinden;
wobei vorzugsweise das Zusammenführen der Platte (11) und des oberen Werkzeugteils (15) das Anheben der Behälterauflagefläche der Platte (11) relativ zu dem Eingangsförderer (12) umfasst.

7. Verfahren nach einem vorstehenden Anspruch, wobei Absenken der Behälterauflageflächen des Eingabeförderers (12) und der Platte (11) das Absenken der Behälterauflagefläche des Eingabeförderers (12)
und/oder der Behälterauflagefläche der Platte (11) umfasst, so dass die Behälter durch den Transfermechanismus mit einem vertikalen Abstand von 5 mm oder mehr zwischen den Behältern und der jeweiligen Behälterauflagefläche, vorzugsweise mit einem vertikalen Abstand von 8 mm, noch bevorzugter mit einem vertikalen Abstand von 10 mm oder mehr, getragen werden.

8. Verfahren nach einem vorstehenden Anspruch, wobei das System (10) einen Eingangsförderer-Antriebsmechanismus umfasst, der konfiguriert ist, um den Eingangsförderer (12) anzutreiben, wobei der Eingangsförderer-Antriebsmechanismus stationär ist, wenn die Behälterlagerfläche des Eingangsförderers (12) angehoben und abgesenkt wird.

9. Verfahren nach einem vorstehenden Anspruch, wobei der Eingabeförderer (12) ein Bandförderer ist, der ein Eingabeband umfasst, wobei die Behälterauflagefläche eine Außenfläche des Eingabebandes ist;
wobei vorzugsweise die Spannung des Zuführbandes im Wesentlichen konstant ist, wenn die Behälterauflagefläche des Zuführförderers (12) angehoben und abgesenkt wird;
und wobei das System (10) vorzugsweise einen Eingangsförderer-Antriebsmechanismus umfasst, der konfiguriert ist, um das Eingangsband über eine Antriebsrolle anzutreiben, und wobei eine Kontaktlänge zwischen dem Eingangsband und der Antriebsrolle im Wesentlichen dieselbe ist, wenn die Behälterlagerfläche des Eingangsförderers (12) angehoben und abgesenkt wird.

10. Verfahren nach einem vorstehenden Anspruch, wobei die Platte (11) und der Eingabeförderer (12) mechanisch so verbunden sind, dass die Behälterauflageflächen der Platte (11) und des Eingabeförderers (12) durch einen einzigen Hebe- und Senkmechanismus gleichzeitig angehoben und abgesenkt werden.

11. Verfahren nach einem vorstehenden Anspruch, wobei das System (10) einen einzigen Hebe- und Senkmechanismus umfasst, der konfiguriert ist, um:
die Behälterauflagefläche der Platte (11) abzusenken, so dass die gegriffenen Behälter vom Übergabemechanismus (14) getragen werden;
und die Behälterauflagefläche der Platte (11) anzuheben, so dass die darauf befindlichen Behälter bearbeitet werden können;
wobei vorzugsweise der einzelne Hebe- und Senkmechanismus konfiguriert ist, um die Behälterauflagefläche der Platte (11) so anzuheben, dass die darauf positionierten Behälter von dem oberen Werkzeugteil (15) eines Schalensieglers erfasst werden

12. Verfahren nach einem vorstehenden Anspruch, wobei die auf dem Eingangsförderer (12) aufgenommenen Behälter von einem vorgeschalteten Auslieferungsförderer übernommen werden;
wobei vorzugsweise der Abgabeförderer eine bewegliche Behälterlagerfläche umfasst, die ein stromabwärts gelegenes Ende neben dem Eingabeförderer und ein stromaufwärts gelegenes Ende hat, das am weitesten von dem Eingabeförderer (12) entfernt ist; und wobei das Verfahren vorzugsweise umfasst:
Anheben und Absenken des stromabwärtigen Endes der Behälterauflagefläche des Auslieferungsförderers, wenn die Behälterauflagefläche des Eingangsförderers (12) angehoben und abgesenkt wird, und wobei vorzugsweise das stromaufwärtige Ende der Behälterauflagefläche des Auslieferungsförderers stationär bleibt, wenn das stromabwärtige Ende angehoben und abgesenkt wird.

13. Verfahren nach einem vorstehenden Anspruch, das Verfahren weiter umfassend die folgenden Schritte:
Absenken der Behälterauflagefläche der Platte (11), so dass die Behälter durch den Transfermechanismus (12) über die Platte (11) gestützt werden;
Übergeben der Behälter von oberhalb der Platte (11) zu einem Ausgabeförderer (13) unter Verwendung des Übergabemechanismus (14); und
Freigeben der Behälter aus dem Transfermechanismus (14);
und wobei das Verfahren vorzugsweise weiter den nachfolgenden Schritt umfasst:
Transportieren der Behälter von der Platte (11) weg mit Hilfe des Ausgabeförderers (13);
und wobei vorzugsweise der Ausgabeförderer (13) und/oder eine Behälterauflagefläche des Ausgabeförderers (13) während des gesamten Verfahrens in vertikaler Richtung im Wesentlichen stationär bleibt.

14. Verfahren zur Handhabung von zwei aufeinanderfolgenden Losen von Behältern, wobei jedes Los einen oder mehrere Behälter umfasst;
wobei die beiden aufeinanderfolgenden Chargen von Behältern eine stromabwärts gelegene Charge und eine nachfolgende stromaufwärts gelegene Charge einschließen und wobei jede Charge von Behältern gemäß dem Verfahren nach einem der vorhergehenden Ansprüche behandelt wird;
und wobei das Verfahren weiter umfasst:
gleichzeitiges Überführen des stromabwärts gelegenen Stapels von Behältern von der Platte (11) zu einem Ausgangsförderer (13) und Überführen des stromaufwärts gelegenen Stapels von Behältern von über dem Eingangsförderer (12) zu über der Platte (11) unter Verwendung des Überführungsmechanismus (14).

15. Behälterhandhabungssystem (10), umfassend:
eine Platte (11) und einen Eingangsförderer (12), die jeweils eine bewegliche Behälterauflagefläche umfassen, die konfiguriert ist, um sich zwischen einer jeweiligen angehobenen Position und einer jeweiligen abgesenkten Position zu bewegen; und
einen hin- und hergehenden Transfermechanismus (14), der konfiguriert ist, um:
einen oder mehrere Behälter, die zuvor auf dem Eingangsförderer (12) aufgenommen wurden, zu stützen, wenn die Behälterauflagefläche (12a) des Eingangsförderers (12) von ihrer angehobenen Position in ihre abgesenkte Position abgesenkt wird, so dass der eine oder die mehreren Behälter durch den Transfermechanismus (14) über dem Eingangsförderer (12) gestützt werden; und
2den einen oder die mehreren Behälter über das Eingabeband (12) auf die Platte (11) zu befördern, wenn sich das Eingabeband (12) und die Platte (11) in ihren jeweiligen abgesenkten Positionen befinden.

## Revendications

1. Procédé de manipulation d'un ou plusieurs récipients (C) mis en œuvre par un système (10) comprenant une platine (11), un convoyeur d'entrée (12) et un mécanisme de transfert (14), dans lequel la platine (11) et le convoyeur d'entrée (12) comprennent chacun une surface d'appui de récipient mobile, le procédé comprenant :
la réception des un ou plusieurs récipients sur le convoyeur d'entrée (12) ;
l'abaissement des surfaces d'appui de récipient du convoyeur d'entrée (12) et de la platine (11) de sorte que les récipients soient supportés par le mécanisme de transfert (14) sur le convoyeur d'entrée (12) ;
le transfert des récipients depuis le dessus du convoyeur d'entrée (12) vers le dessus de la platine (11) en utilisant le mécanisme de transfert (14) ;
l'élévation des surfaces d'appui de récipient du convoyeur d'entrée (12) et de la platine (11) de sorte que les récipients soient supportés par la platine (11) ; et
la séparation des récipients du mécanisme de transfert (14).

2. Procédé selon l'une quelconque des revendications précédentes, dans lequel le mécanisme de transfert (14) comprend des bras de transfert configurés pour supporter et transférer les récipients, et dans lequel le procédé comprend la fermeture des bras de transfert (14) autour des récipients reçus sur le convoyeur d'entrée (12) de sorte que les récipients puissent être supportés par les bras de transfert.

3. Procédé selon l'une quelconque des revendications précédentes, dans lequel la séparation des récipients du mécanisme de transfert (14) comprend l'élévation de la surface d'appui de récipient de la platine (11).

4. Procédé selon l'une quelconque des revendications précédentes, dans lequel les un ou plusieurs récipients reçus par le convoyeur d'entrée (12) comprennent chacun une ouverture non scellée.

5. Procédé selon l'une quelconque des revendications précédentes, dans lequel le procédé comprend l'étape ultérieure de scellement des un ou plusieurs récipients sur la platine (11) ;
dans lequel de préférence le scellement des un ou plusieurs récipients comprend la fourniture d'un film sur une ouverture de chaque récipient ; et dans lequel de préférence les récipients scellés sont étanches aux gaz et/ou étanches à l'eau.

6. Procédé selon l'une quelconque des revendications précédentes, dans lequel le système comprend une scelleuse de barquettes ;
et dans lequel de préférence la platine (11) fait partie d'une partie d'outil inférieure d'une scelleuse de barquettes et le scellement des un ou plusieurs récipients sur la platine comprend :
la fourniture d'un film entre les récipients sur la platine (11) et une partie d'outil supérieure (15) ;
le rapprochement de la platine (11) et de la partie d'outil supérieure (15) de sorte que la partie d'outil supérieure (15) mette en contact le film et les récipients sous-jacents ; et
le chauffage de la partie d'outil supérieure (15) de manière à joindre le film aux récipients ;
dans lequel de préférence le rapprochement de la platine (11) et de la partie d'outil supérieure (15) comprend l'élévation de la surface d'appui de récipient de la platine (11) par rapport au convoyeur d'entrée (12).

7. Procédé selon l'une quelconque des revendications précédentes, dans lequel l'abaissement des surfaces d'appui de récipient du convoyeur d'entrée (12) et de la platine (11) comprend l'abaissement de la surface d'appui de récipient du convoyeur d'entrée (12) et/ou de la surface d'appui de récipient de la platine (11) de telle sorte que les récipients soient supportés par le mécanisme de transfert avec un espace vertical de 5 mm ou plus entre les récipients et la surface d'appui de récipient respective, de préférence avec un espace vertical de 8 mm, plus préférablement avec un espace vertical de 10 mm ou plus.

8. Procédé selon l'une quelconque des revendications précédentes, dans lequel le système (10) comprend un mécanisme d'entraînement de convoyeur d'entrée configuré pour entraîner le convoyeur d'entrée (12), dans lequel le mécanisme d'entraînement de convoyeur d'entrée est fixe lorsque la surface d'appui de récipient du convoyeur d'entrée (12) est élevée et abaissée.

9. Procédé selon l'une quelconque des revendications précédentes, dans lequel le convoyeur d'entrée (12) est un convoyeur à courroie comprenant une courroie d'entrée, la surface d'appui de récipient étant une surface extérieure de la courroie d'entrée ;
dans lequel de préférence la tension de la courroie d'entrée est sensiblement constante lorsque la surface d'appui de récipient du convoyeur d'entrée (12) est élevée et abaissée ;
et dans lequel de préférence le système (10) comprend un mécanisme d'entraînement de convoyeur d'entrée configuré pour entraîner la courroie d'entrée par l'intermédiaire d'un rouleau d'entraînement, et dans lequel une longueur de contact entre la courroie d'entrée et le rouleau d'entraînement est sensiblement identique lorsque la surface d'appui de récipient du convoyeur d'entrée (12) est élevée et abaissée.

10. Procédé selon l'une quelconque des revendications précédentes, dans lequel la platine (11) et le convoyeur d'entrée (12) sont liés mécaniquement de sorte que les surfaces d'appui de récipient de la platine (11) et du convoyeur d'entrée (12) soient simultanément élevées et abaissées par un mécanisme unique d'élévation et d'abaissement.

11. Procédé selon l'une quelconque des revendications précédentes, dans lequel le système (10) comprend un mécanisme unique d'élévation et d'abaissement configuré pour :
abaisser la surface d'appui de récipient de la platine (11) de sorte que les récipients saisis soient supportés par le mécanisme de transfert (14) ;
et pour élever la surface d'appui de récipient de la platine (11) de sorte que des récipients positionnés sur celle-ci puissent être traités ;
dans lequel de préférence le mécanisme unique d'élévation et d'abaissement est configuré pour élever la surface d'appui de récipient de la platine (11) de telle sorte que des récipients positionnés sur celle-ci soient mis en contact avec la partie d'outil supérieure (15) d'une scelleuse de barquettes.

12. Procédé selon l'une quelconque des revendications précédentes, dans lequel les récipients reçus sur le convoyeur d'entrée (12) sont reçus depuis un convoyeur de distribution amont ;
dans lequel de préférence le convoyeur de distribution comprend une surface d'appui de récipient mobile présentant une extrémité aval adjacente au convoyeur d'entrée et une extrémité amont la plus éloignée du convoyeur d'entrée (12) ; et dans lequel le procédé comprend de préférence :
l'élévation et l'abaissement de l'extrémité aval de la surface d'appui de récipient du convoyeur de distribution lorsque la surface d'appui de récipient du convoyeur d'entrée (12) est élevée et abaissée et dans lequel de préférence l'extrémité amont de la surface d'appui de récipient du convoyeur de distribution reste fixe lorsque l'extrémité aval est élevée et abaissée.

13. Procédé selon l'une quelconque des revendications précédentes, le procédé comprenant en outre les étapes ultérieures consistant à :
abaisser la surface d'appui de récipient de la platine (11) de sorte que les récipients soient supportés par le mécanisme de transfert (12) sur la platine (11) ;
transférer les récipients depuis le dessus de la platine (11) vers un convoyeur de sortie (13) en utilisant le mécanisme de transfert (14) ; et
séparer les récipients du mécanisme de transfert (14) ;
et dans lequel le procédé comprend en outre de préférence l'étape ultérieure consistant à :
transporter les récipients à distance de la platine (11) en utilisant le convoyeur de sortie (13) ;
et dans lequel de préférence le convoyeur de sortie (13) et/ou une surface d'appui de récipient du convoyeur de sortie (13) reste sensiblement fixe dans la direction verticale tout au long du procédé.

14. Procédé de manipulation de deux lots séquentiels de récipients, chaque lot comprenant un ou plusieurs récipients ;
dans lequel les deux lots séquentiels de récipients incluent un lot aval et un lot amont ultérieur, et dans lequel chaque lot de récipients est manipulé selon le procédé de l'une quelconque des revendications précédentes ;
et dans lequel le procédé comprend en outre :
le transfert simultané du lot aval de récipients depuis la platine (11) vers un convoyeur de sortie (13) et le transfert du lot amont de récipients depuis le convoyeur d'entrée (12) vers le dessus de la platine (11) en utilisant le mécanisme de transfert (14).

15. Système de manipulation de récipients (10) comprenant :
une platine (11) et un convoyeur d'entrée (12) comprenant chacun une surface d'appui de récipient mobile configurée pour se déplacer entre une position relevée respective et une position abaissée respective ; et
un mécanisme de transfert alternatif (14) configuré pour :
supporter un ou plusieurs récipients préalablement reçus sur le convoyeur d'entrée (12) lorsque la surface d'appui de récipient (12a) du convoyeur d'entrée (12) est abaissée depuis sa position relevée vers sa position abaissée, de sorte que les un ou plusieurs récipients soient supportés par le mécanisme de transfert (14) sur le convoyeur d'entrée (12) ; et
transférer les un ou plusieurs récipients depuis le dessus du convoyeur d'entrée (12) vers le dessus de la platine (11) lorsque le convoyeur d'entrée (12) et la platine (11) sont dans leurs positions abaissées respectives.
